# EUROPEAN PATENT SPECIFICATION

(11) **EP 4 248 313 B1**
(45) Date of publication and mention of the grant of the patent: **21.05.2025**
(21) Application number: 21827464.5
(22) Date of filing: 18.11.2021
(51) Int. Cl.: G06F 9/451

(54) **SYSTEM AND METHOD FOR SELECTIVELY IMPLEMENTING LAYOUT CONFIGURATIONS AMONGST OBJECT GROUPINGS OF A DESIGN UNDER EDIT**
SYSTEM UND VERFAHREN ZUR SELEKTIVEN IMPLEMENTIERUNG VON LAYOUTKONFIGURATIONEN ZWISCHEN OBJEKTGRUPPIERUNGEN EINES ZU BEARBEITENDEN ENTWURFS
SYSTÈME ET PROCÉDÉ POUR METTRE EN OEUVRE SÉLECTIVEMENT DES CONFIGURATIONS DE DISPOSITION ENTRE DES GROUPEMENTS D'OBJETS D'UNE CONCEPTION EN COURS D'ÉDITION

(30) Priority: 18.11.2020 US 202063115608 P
(43) Date of publication of application: 27.09.2023
(73) Proprietor: Figma, Inc., San Francisco, CA 94102 (US)
(72) Inventor: KUWAMOTO, Sho, San Francisco, California 94102 (US); WU, William, San Francisco, California 94102 (US); WICHARY, Marcin, San Francisco, California 94102 (US); LIN, Emily, San Francisco, California 94102 (US); ANDERSSON, Rasmus, San Francisco, California 94102 (US); RILEE, Kenrick, San Francisco, California 94102 (US); KLEIN, Nikolas, San Francisco, California 94102 (US); RASMUSSEN, Kris, San Francisco, California 94102 (US)
(74) Representative: Nordic Patent Service A/S
(86) International application number: PCT/US2021/059987
(87) International publication number: WO 2022/109200

(56) References cited:
- US-A1- 2008 282 188
- IBM: "IBM VisualAge for Java, Version 3.5 - Visual Composition", 2000, pages 1 - 253, XP055890198, Retrieved from the Internet <URL:http://www.inf.fu-berlin.de/inst/ag-db/software/VAJ_PDF/jvbpdf.pdf> [retrieved on 20220210]

## Description

### RELATED APPLICATIONS

This application claims benefit of priority to Provisional U.S. Patent Application No. 63/115,608, filed November 18, 2020.

This application is also a continuation-in-part of PCT/US2020/060300, filed November 12, 2020; which claims benefit of priority to U.S. Patent Application No. 16/682,982, filed November 13, 2019.

### TECHNICAL FIELD

Examples described herein relate to a network computing system and method to implement a design system, and more specifically, a design system to selectively implement layout configurations amongst object groupings of a design under edit.

### BACKGROUND

Software design tools have many forms and applications. In the realm of application user interfaces, for example, software design tools require designers to blend functional aspects of a program with aesthetics and even legal requirements, resulting in a collection of pages which form the user interface of an application. For a given application, designers often have many objectives and requirements that are difficult to track.

IBM: "IBM VisualAge for Java, Version 3.5 - Visual Composition" (2000) pertains to a visual composition editor based on visual, non-visual and composite beans. The visual composition editor allows a user to select and place beans to create graphical user interfaces, and to use nonvisual beans to perform logic and data access. A layout manager, for which components including beans may be depicted individually or in groupings, can be assigned to a container. In a layout, a user can then define properties for the layout that govern the specifics of the sizing and resizing behavior for the components.

US 2008/282188 A1 pertains to shape elasticity in visual layouts, in which a target object undergoes resizing and/or repositioning related by containment to one or more related object laid out on a computer user interface. Original sizes and/or positions of the related objects to the target object resized and/or repositioned are stored. During the resize and/or reposition operation of the target object, an impact on a related object is calculated based upon a change from the stored original sizes and/or positions of the related object.

### BRIEF DESCRIPTION OF THE DRAWINGS

FIG. 1A illustrates an interactive graphic design system for a computing device of a user, according to one or more examples.
FIG. 1B illustrates a network computing system to implement an interactive graphic design system on a user computing device, according to one or more examples.
FIG. 1C illustrates a network computing system to implement an interactive graphic design system for multiple users in a collaborative network platform, according to one or more examples.
FIG. 2A and FIG. 2B illustrate example methods for providing an interactive graphic design interface, according to one or more examples.
FIG. 3A through FIG. 3L illustrate alternative implementations of layout logic which is provided by an interactive graphic design system, in accordance with one or more examples.
FIG. 4A through FIG. 4H illustrate examples in which spacing layout configurations of object groupings are visualized on a canvas of a design under edit.
FIG. 5 illustrates example design tools for selecting and implementing layout logic for individual objects of object groupings.
FIG. 6A through FIG. 6C illustrates use of a multi-state design tool that provides a preview of the design tools next state, according to one or more examples.
FIG. 7A and FIG. 7B illustrate implementation of an interactive design tool that is embedded with a canvas on which a design under edit is rendered.
FIG. 8 illustrates a computer system on which one or more embodiments are implemented.
FIG. 9 illustrates a user computing device for use with one or more examples, as described.

### DETAILED DESCRIPTION

Examples include a computing system that operates to implement an interactive graphic design system for enabling users to selectively implement layout configurations amongst object groupings of a design under edit.

In examples, a computing system is configured to implement an interactive graphic design system for designer, such as user interface designers ("UI designers"), web designers, and web developers. An interactive graphic design system as described is used to generate user interfaces, including functional or dynamic user interfaces. Such systems typically integrate a design interface with elements that represent the functional, dynamic nature of the functional user interface.

Examples further provide for an interactive graphic design system which enables a user to select and apply a layout configuration to an object grouping of a rendered design under edit. Once a layout configuration is applied to an object grouping, the system operates to maintain the layout configuration as the individual objects of the object grouping are manipulated by additional user input. Among other technical benefits, the system enables users to deploy layout logic with a selected object groupings to better control layout configurations amongst objects that actively receive user input.

Still further, in some examples, a network computer system is provided to include memory resources store a set of instructions, and one or more processors are operable to communicate the set of instructions to a plurality of user devices. The set of instructions are communicated to user computing devices, in connection with the user computing devices being operated to render a corresponding design under edit on a canvas, where the design under edit is edited by user input that is indicative of any one of multiple different input actions. The set of instructions are executed on the computing devices to cause each of the computing devices to determine one or more input actions to perform based on user input. The instructions further cause the user computing devices to implement the one or more input actions to modify the design under edit.

Accordingly, as described with some examples, an example interactive graphic design system is implemented in a collaborative computing environment, where multiple users can access and contribute to a design interface under edit at the same time. Such examples further recognize that in a collaborative environment, a rendered object grouping can receive input from multiple users, making a desired layout configuration amongst the object groupings difficult to control. An interactive graphic design system as described with some examples is able to maintain, and thereby control, a specific layout configuration amongst a grouping of objects while the objects are being actively manipulated by input from multiple users.

One or more embodiments described herein provide that methods, techniques, and actions performed by a computing device are performed programmatically, or as a computer-implemented method. Programmatically, as used herein, means through the use of code or computer-executable instructions. These instructions are stored in one or more memory resources of the computing device..

One or more embodiments described herein can be implemented using programmatic modules, engines, or components. A programmatic module, engine, or component can include a program, a sub-routine, a portion of a program, or a software component or a hardware component capable of performing one or more stated tasks or functions. As used herein, a module or component can exist on a hardware component independently of other modules or components. Alternatively, a module or component can be a shared element or process of other modules, programs or machines.

Some embodiments described herein generally require the use of computing devices, including processing and memory resources. For example, one or more embodiments described herein are implemented, in whole or in part, on computing devices such as servers, desktop computers, cellular or smartphones, tablets, wearable electronic devices, laptop computers, printers, digital picture frames, network equipment (e.g., routers) and tablet devices. Memory, processing, and network resources are all used in connection with the establishment, use, or performance of any embodiment described herein (including with the performance of any method or with the implementation of any system).

Furthermore, one or more embodiments described herein are implemented through the use of instructions that are executable by one or more processors. These instructions are carried on a computer-readable medium. Machines shown or described with figures below provide examples of processing resources and computer-readable mediums on which instructions for implementing embodiments of the invention is carried and/or executed. In particular, the numerous machines shown with embodiments of the invention include processor(s) and various forms of memory for holding data and instructions. Examples of computer-readable mediums include permanent memory storage devices, such as hard drives on personal computers or servers. Other examples of computer storage mediums include portable storage units, such as CD or DVD units, flash memory (such as carried on smartphones, multifunctional devices or tablets), and magnetic memory. Computers, terminals, network enabled devices (e.g., mobile devices, such as cell phones) are all examples of machines and devices that utilize processors, memory, and instructions stored on computer-readable mediums. Additionally, embodiments are implemented in the form of computer-programs, or a computer usable carrier medium capable of carrying such a program.

### SYSTEM DESCRIPTION

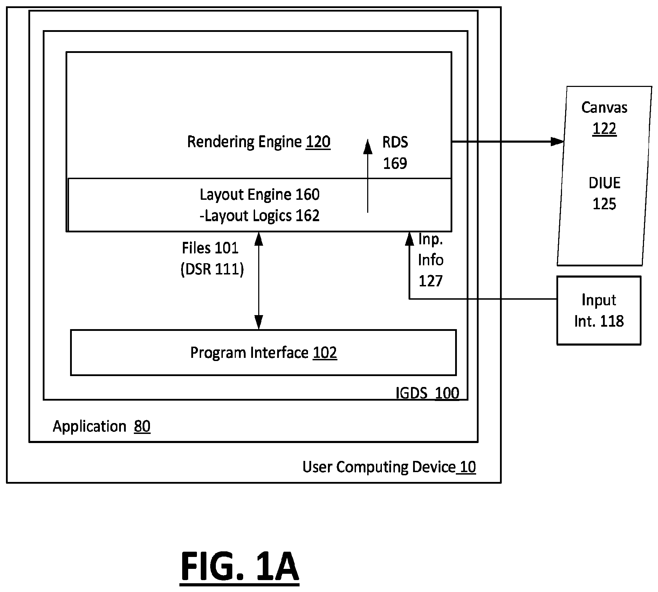

FIG. 1A illustrates an interactive graphic design system for a computing device of a user, according to one or more examples. An interactive graphic design system ("IGDS") 100 can be implemented in any one of multiple different computing environments. For example, in some variations, the IGDS 100 is implemented as a client-side application that executes on the user computing device 10 to provide functionality as described with various examples. In other examples, such as described below, the IGDS 100 is implemented through use of a web-based application 80. As an addition or alternative, the IGDS 100 is implemented as a distributed system, such that processes described with various examples execute on a network computer (e.g., server) and on the user device 10.

According to examples, the IGDS 100 is implemented on a user computing device 10 to enable a corresponding user to design various types of interfaces using graphical elements. The IGDS 100 includes processes that execute as or through a web-based application 80 that is installed on the computing device 10. As described by various examples, web-based application 80 executes scripts, code and/or other logic (the "programmatic components") to implement functionality of the IGDS 100. Additionally, in some variations, the IGDS 100 is implemented as part of a network service, where web-based application 80 communicates with one or more remote computers (e.g., server used for a network service) to executes processes of the IGDS 100.

In some examples, web-based application 80 retrieves some or all of the programmatic resources for implementing the IGDS 100 from a network site. As an addition or alternative, web-based application 80 retrieves some or all of the programmatic resources from a local source (e.g., local memory residing with the computing device 10). The web-based application 80 also accesses various types of data sets in providing the IGDS 100. The data sets correspond to files and libraries, which can be stored remotely (e.g., on a server, in association with an account) or locally.

In examples, the web-based application 80 corresponds to a commercially available browser, such as GOOGLE CHROME (developed by GOOGLE, INC.), SAFARI (developed by APPLE, INC.), and INTERNET EXPLORER (developed by the MICROSOFT CORPORATION). In such examples, the processes of the IGDS 100 are implemented as scripts and/or other embedded code which web-based application 80 downloads from a network site. For example, the web-based application 80 executes code that is embedded within a webpage to implement processes of the IGDS 100. The web-based application 80 can also execute the scripts to retrieve other scripts and programmatic resources (e.g., libraries) from the network site and/or other local or remote locations. By way of example, the web-based application 80 executes JAVASCRIPT embedded in an HTML resource (e.g., web-page structured in accordance with HTML 5.0 or other versions, as provided under standards published by W3C or WHATWG consortiums). In some examples, the rendering engine 120, layout engine 160 and/or other components utilize graphics processing unit (GPU) accelerated logic, such as provided through WebGL (Web Graphics Library) programs which execute Graphics Library Shader Language (GLSL) programs that execute on GPUs.

According to examples, user of computing device 10 operates web-based application 80 to access a network site, where programmatic resources are retrieved and executed to implement the IGDS 100. In this way, the user initiates a session to implement the IGDS 100 for purpose of creating and/or editing a design interface. In examples, the IGDS 100 includes a program interface 102, an input interface 118, a rendering engine 120 and a layout engine 160. The program interface 102 includes one or more processes which execute to access and retrieve programmatic resources from local and/or remote sources.

In an implementation, the program interface 102 generates a canvas 122, using programmatic resources which are associated with web-based application 80 (e.g., HTML 5.0 canvas). As an addition or variation, the program interface 102 can trigger or otherwise cause the canvas 122 to be generated using programmatic resources and data sets (e.g., canvas parameters) which are retrieved from local (e.g., memory) or remote sources (e.g., from network service).

The program interface 102 also retrieves programmatic resources that include an application framework for use with canvas 122.The application framework includes data sets which define or configure, for example, a set of interactive graphic tools that integrate with the canvas 122 and which comprise the input interface 118, to enable the user to provide input for creating and/or editing a design interface.

According to some examples, the input interface 118 is implemented as a functional layer that is integrated with the canvas 122 to detect and interpret user input. The input interface 118 can, for example, use a reference of the canvas 122 to identify a screen location of a user input (e.g., 'click'). Additionally, the input interface 118 can interpret an input action of the user based on the location of the detected input (e.g., whether the position of the input indicates selection of a tool, an object rendered on the canvas, or region of the canvas), the frequency of the detected input in a given time period (e.g., double-click), and/or the start and end position of an input or series of inputs (e.g., start and end position of a click and drag), as well as various other input types which the user can specify (e.g., right-click, screen-tap, etc.) through one or more input devices. In this manner, the input interface 118 can interpret, for example, a series of inputs as a design tool selection (e.g., shape selection based on location of input), as well as inputs to define attributes (e.g., dimensions) of a selected shape.

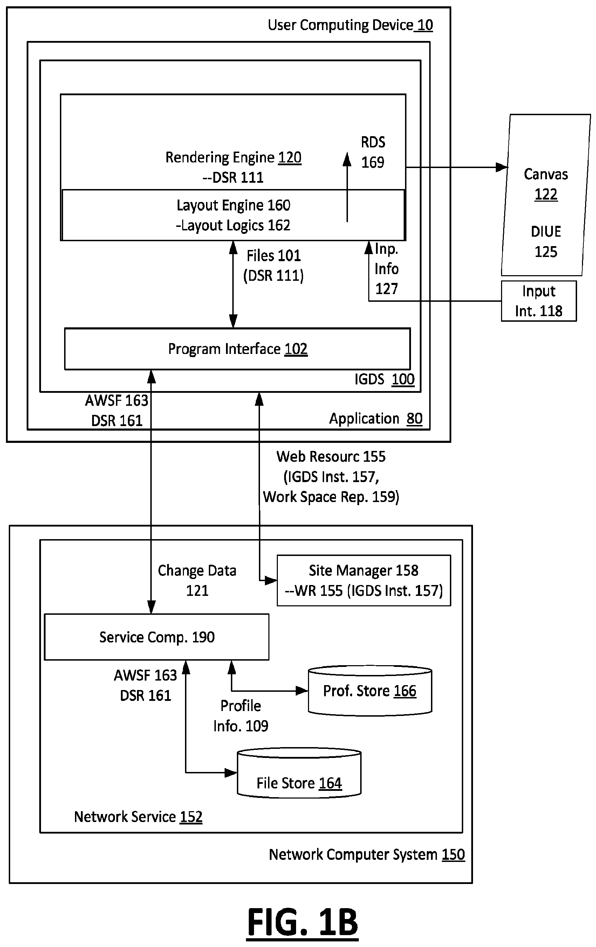

Additionally, the program interface 102 is used to retrieve, from local or remote sources, programmatic resources and data sets which include files 101 which comprise an active workspace for the user. The retrieved data sets include one or more pages that include design elements which collectively form a design interface, or a design interface that is in progress. Each file 101 can include one or multiple data structure representations 111 which collectively define the design interface. The files 101 may also include additional data sets which are associated with the active workspace. For example, as described with some examples, the individual pages of the active workspace are associated with a set of constraints 145. As an additional example, the program interface 102 can retrieve (e.g., from network service 152 (see FIG. 1B), from local memory, etc.) one or more types of profile information 109, such as user profile information which can identify past activities of the user of the computing device 10 when utilizing the IGDS 100. The profile information 109 can identify, for example, input types (or actions) of the user with respect to the page(s) of the active workspace, or more generally, input actions of the user in a prior time interval. In some variations, the profile information 109 can also identify historical or contextual information about individual design interfaces, as represented by corresponding data structure representations 111. As another example, the files 101 include layout logic 162 for implementing layout configurations amongst object groupings. For example, the files 101 include a collection of layout logic a user can select and deploy for a given design under edit. Additionally, the files 101 can include data sets which represent a deployed layout logic 162. Such data sets can further include data that links or otherwise associates the particular layout logic 162 with a particular object grouping, as well as data that identifies settings, values and other selections of the user with respect to the manner in which the layout logic 162 is implemented on the design under edit.

In examples, the rendering engine 120 uses the data structure representations 111 to render a corresponding DUE 125 on the canvas 122, where the DUE 125 reflects graphic elements and their respective attributes as provided with the individual pages of the files 101. The user can edit the DUE 125 using the input interface 118. Alternatively, the rendering engine 120 generates a blank page for the canvas 122, and the user uses the input interface 118 to generate the DUE 125. As rendered, the DUE 125 includes graphic elements such as a background and/or a set of objects (e.g., shapes, text, images, programmatic elements), as well as attributes of the individual graphic elements. Each attribute of a graphic element can include an attribute type and an attribute value. For an object, the types of attributes include, shape, dimension (or size), layer, type, color, line thickness, text size, text color, font, and/or other visual characteristics. Depending on implementation, the attributes reflect properties of two- or three-dimensional designs. In this way, attribute values of individual objects can define, for example, visual characteristics of size, color, positioning, layering, and content, for elements that are rendered as part of the DUE 125.

In examples, individual design elements are also defined in accordance with a desired run-time behavior. By way of example, some objects are defined to have run-time behaviors that are either static or dynamic. The attributes of dynamic objects change in response to predefined run-time events generated by the underlying application that is to incorporate the DUE 125. Additionally, some objects are associated with logic that defines the object as being a trigger for rendering or changing other objects, such as through implementation of a sequence or workflow. Still further, other objects are associated with logic that provides the design elements to be conditional as to when they are rendered and/or their respective configuration or appearance when rendered. Still further, objects are defined to be interactive, where one or more attributes of the object may change based on user-input during the run-time of the application.

The input interface 118 can receive and process at least some user inputs to determine input information 127, where the input information 127 indicates (i) an input action type (e.g., shape selection, object selection, object sizing input, object positioning input, color selection), (ii) an object that is directly indicated by the input action (e.g., object being resized), (iii) a desired attribute that is to be altered by the input action, and/or (iv) a desired value for the attribute being altered. The rendering engine 120 receives the input information 127, and the rendering engine 120 implements changes indicated by the input information 127 to update the DUE 125. When changes are implemented to the DUE 125, the changes are also reflected in the accompanying data structure representations 111 for the DUE 125.

### LAYOUT ENGINE

In examples, the rendering engine 120 executes in conjunction with a layout engine 160. Among other functions, layout engine 160 operates to enable the user to (i) enable a user to select a layout logic 162 from a collection, (ii) configure the layout logic to selectively deploy and be linked with a selected object grouping, and (iii) implement a layout configuration that is defined by the select layout logic 162 for the linked object grouping while the linked object grouping is being manipulated (e.g., resized or repositioned) by user input. When a particular layout logic 162 is selected and linked to a rendered object grouping, the layout engine 160 further operates to detect and receive input information 127 for user inputs that are directed to the linked object grouping.

According to some examples, the layout engine 160 processes the input information 127, which indicates, for example, a resizing or repositioning of one or more objects of the object grouping, using the select layout logic 162 that is linked to that object grouping. The layout engine 160 executes the selected layout logic 162 to determine, for example, a resizing or repositioning of individual objects of the object grouping for purpose of maintaining a layout configuration that is defined by the linked layout logic 162 while carrying out the corresponding input action of the user. The layout engine 160 further generates a result data set 169 from implementing the linked layout logic 162. The result data set 169 includes position information, boundary information (e.g., position information that identifies one or more boundaries of an object or object set) and/or dimensional information (e.g., one or more dimensions of a frame of an object or object set) for individual objects of the linked object grouping. The result data set 169 represents a change to the object grouping as a result of the user input (e.g., to resize or reposition object(s) of the object grouping), as well as the implementation of the predefined layout configuration. The rendering engine 120 processes the result data set 169 to reflect the changes to the object grouping, stemming from the user input and the implementation of the predefined layout configuration of the selected layout logic 162.

Each layout logic 162 includes an instruction set and data that collectively rules and settings for implementing a predefined layout configuration amongst object grouping. By way of example, the layout logic 162 defines a layout configuration that identifies a relative positioning, dimensional relationship and/or spacing as between or amongst individual objects of a linked object grouping.

As described in greater detail, a user can provide selection input to select one or more layout logics 162 of a layout logic collection for deployment with a select grouping of objects that are rendered as part of the DUE 125. In examples, the layout engine 120 associates a selected layout logic 162 with a particular object grouping, such as a parent child grouping. Once the selected layout logic 162 is associated with a particular object grouping, the layout engine 160 implements the predefined layout configuration as a response to one or more predefined triggers of the select layout logic 162.

As further described, the layout configurations which are implemented by the layout engine 160 are instant and responsive to changes made to other objects of the select object grouping. In examples, the layout engine 160 executes the selected layout logic 162 to (i) detect user input to resize or reposition a specific object of the object grouping, (ii) calculate changes to make in size or position to one or more objects in order to implement the layout configuration of the selected layout logic 162, (iii) communicate the changes (e.g., object positioning data, object border data) to the rendering engine 120 for rendering, along with a change resulting from user input. In examples, the layout engine 160 executes with rendering engine 120 to fluidly, and in-real time, reflect changes to an object grouping as a result of user input to one or more of the objects of the object grouping. For example, the operations of detecting, calculating and rendering can be done at a speed that is approximately equal to 0.0167 seconds, so that the changes caused by user input and implementation of the layout configuration appear fluid and instant to the user operating a 60HZ monitor.

The layout engine 160 executes select layout logic 162 to automatically implement one or more layout configurations amongst object groupings that are arranged, or otherwise linked, to have a parent/child relationship. For example, a user interacts with DUE 125 to parent an object to another object (e.g., select and drag one object over another object). In parent/child object groupings, the child object(s) are positioned within a frame of the parent object. The layout engine 160 executes select layout logics 160 to automatically resize or reposition one or more objects of a respective linked parent child grouping, where the resizing/repositioning is based on resizing or repositioning changes of other objects of the parent child grouping.

By way of examples, layout engine 160 executes a first layout logic 162 to implement a first layout configuration in which a dimension of a parent object is resized to minimize a difference between dimension(s) of the parent and child object(s) (e.g., parent object 'hugs' child objects). Additionally, the layout engine 160 executes a second layout logic to implement a second layout configuration in which a dimension of one or more child object(s) are resized to minimize a difference between the dimensions of the parent and child object(s) (e.g., by having child object(s) 'fill' the parent object). As an addition or variation, the layout engine 160 executes additional layout logics 162 that implement one or more spacing configurations as between select objects of the object groupings (e.g., as between child and parent objects, and/or as between child objects).

As another addition or variation, the layout engine 160 executes layout logic 162 to implement configurations for wrapping, reverse wrapping or no wrapping with respect to child objects that are added or removed from a parent object, so as increase or decrease a collective size of the child objects within a parent object. In a wrapping configuration, the addition of child objects causes a dimension of a parent object to increase in a particular direction (e.g., downward) to accommodate the addition, and an orientation of the collective child objects expanding (e.g., by addition of child objects) reflects that direction. Similarly, in reverse wrapping, the reduction of child objects causes a dimension of a parent object to decrease in a particular direction to accommodate removal of an object from the parent object, and a dimension of the collective child objects similarly reduces in that direction.

For an associated object grouping, the layout logic 162 defines (i) a target object set of one or more target objects, (ii) as associated object set of one or more associated objects, and (iii) rules and/or settings that define a layout configuration for the target object(s). The target object set corresponds to the object(s) that are to be subject to the layout configuration, as implemented by the layout engine 160. The associated object set includes objects of the object grouping that trigger the layout engine 160 to implement the select layout configuration on the target object set. In defining the associated object set, the select layout logic 162 also defines one or more attributes of the associated object set which triggers the layout engine 160 to implement the respective predefined layout configuration on the respective target object set. As an addition or variation, the select layout logic 162 defines a change to a dimensional attribute or position of the associated object set, for purpose of defining when changed to the dimensional attribute or position of the associated object triggers the layout engine 160 to implement the predefined layout configuration on the target object set. By way of an example, the layout logic 162 provides that any change to the dimension of the associated object triggers implementation of the predefined layout configuration for the target object set. As another example, the layout logic 162 provides that any change to a position of a portion of an associated object (e.g., position or coordinates of an object's boundary) triggers implementation of the predefined layout configuration for the target object set. In this way, the layout logic 162 is responsive to one or more dimensional or positional changes of an associated object set.

Moreover, in some examples, users specify that the application of the layout logic 162 is specific to a particular direction or orientation (e.g., horizontal, vertical). If a layout configuration is specified to be specific to a particular direction or orientation, the layout engine configures implementation of the layout configuration to be specific to the specified direction. Further, the layout logic 162 is only responsive to resizing or repositioning of the associated object set in the specified direction.

Additionally, in some examples, the user specifies thresholds that define a magnitude or amount of change to an associate object set that is resized or repositioned, before the selected layout logic 162 implements a predefined layout configuration.

According to some examples, layout engine 160 implements operations to determine, in real-time, coordinates of a portion of an associated object (e.g., a left, right, top or bottom boundary of the associate object's frame, a corner of the associate object's frame, etc.) that is being repositioned, as part of a user input operation to resize or move the associated object or otherwise alter an associated object set. The layout engine 160 utilizes the determined coordinates of the portion of the associated object that is being manipulated as input for the layout configuration of the target object set. In examples, the layout engine 160 obtains and act on the coordinate information obtained for the parent object, so as to instantly implement the layout configuration on the target object set.

By way of examples, the select layout logics 162 that is deployed for use in association with a parent child object grouping includes fill layout logic, hug layout logic, and one or more spacing layout logics. As described elsewhere, the fill layout logic can implement a fill layout configuration where one or more child objects are automatically resized and/or repositioned, as a response to input that resizes or repositions the parent object. In variations, the fill layout logic is configured to apply changes to the target object set (child object(s)) in a particular direction (e.g., horizontal or vertical directions), as a response to changes to the associated object set (parent object) which are in the same particular direction.

The hug layout logic can implement a fill layout configuration where a parent object is automatically resized and/or repositioned. A trigger for the hug layout logic includes input that resizes or repositions individual child objects or the respective child objects collectively. In variations, the hug layout logic can also be configured to apply changes to the target object set (parent) in a particular direction (e.g., horizontal or vertical directions), as a response to changes to the associated object set (child object(s)) which are in the same particular direction.

As an additional example, an even spacing layout logic can implement a spacing configuration amongst child objects of a parent/object grouping, where the child objects are maintained in a configuration where they are evenly spaced from one another. The target object set of the even spacing layout logic corresponds to all child objects of a parent/child object grouping, and the associated object set of the even spacing layout logic corresponds to the parent object and all of the child objects of the parent/child object grouping.

When the even spacing layout logic is deployed with a parent/child object grouping, the layout engine 160 responds to the parent object being resized by equally resizing each child object of the parent object, and further by repositioning each child object (as resized) to be spaced from its respective neighbor child object(s) by the same amount. The layout engine 160 responds to the parent object being repositioned in similar fashion - by repositioning all of the child objects to maintain the even spacing between the child objects. In some implementations, if an additional child object is added to the parent object, or if one or more of the child objects are resized, the layout engine 160 automatically repositions each of the child objects to maintain the equal spacing amongst all adjacent pairs of child objects. Additionally, in variations, the even spacing layout logic is configured to implement the spacing configuration to the target object set (all of the child objects) in a particular direction (e.g., horizontal or vertical directions), as a response to changes to the associated object set (child object, parent object) that are in the same particular direction.

As another example, a fixed spacing layout logic implements a fixed spacing configuration amongst adjacent objects of an object grouping. In a parent/child object grouping, the fixed spacing configuration specifies a fixed spacing between, for example, a boundary of a child object (e.g., a boundary corresponding to a portion of a frame of the child object) and a boundary of a parent object (e.g., a boundary corresponding to a portion of a frame of the parent object). Thus, for example, input by a user to reposition or resize a parent object causes the layout engine 160 to reposition the child object so that the fixed spacing between the respective boundaries of the parent and child objects is maintained.

### NETWORK COMPUTING SYSTEM TO IMPLEMENT IGDS

FIG. 1B illustrates a network computing system to implement an interactive graphic design system on a user computing device, according to one or more examples. A network computing system such as described with an example of FIG. 1B is implemented using one or more servers which communicate with user computing devices over one or more networks.

In an example of FIG. 1B, the network computing system 150 performs operations to enable the IGDS 100 to be implemented on the user computing device 10. In variations, the network computing system 150 provides a network service 152 to support the use of the IGDS 100 by user computing devices that utilize browsers or other web-based applications. The network computing system 150 can include a site manager 158 to manage a website where a set of web-resources 155 (e.g., web page) are made available for site visitors. The web-resources 155 can include instructions, such as scripts or other logic ("IGDS instructions 157"), which are executable by browsers or web components of user computing devices.

In some variations, once the computing device 10 accesses and downloads the web-resources 155, web-based application 80 executes the IGDS instructions 157 to implement functionality such as described with some examples of FIG. 1A. For example, the IGDS instructions 157 are executed by web-based application 80 to initiate the program interface 102 on the user computing device 10. The initiation of the program interface 102 may coincide with the establishment of, for example, a web-socket connection between the program interface 102 and a service component 190 of the network computing system 150.

In some examples, the web-resources 155 includes logic which web-based application 80 executes to initiate one or more processes of the program interface 102, causing the IGDS 100 to retrieve additional programmatic resources and data sets for implementing functionality as described by examples. The web resources 155 can, for example, embed logic (e.g., JAVASCRIPT code), including GPU accelerated logic, in an HTLM page for download by computing devices of users. The program interface 102 can be triggered to retrieve additional programmatic resources and data sets from, for example, the network service 152, and/or from local resources of the computing device 10, in order to implement the IGDS 100. For example, some of the components of the IGDS 100 can be implemented through web-pages that can be downloaded onto the computing device 10 after authentication is performed, and/or once the user performs additional actions (e.g., download one or more pages of the workspace associated with the account identifier). Accordingly, in examples as described, the network computing system 150 can communicate the IGDS instructions 157 to the computing device 10 through a combination of network communications, including through downloading activity of web-based application 80, where the IGDS instructions 157 are received and executed by web-based application 80.

The computing device 10 can use web-based application 80 to access a website of the network service 152 to download the webpage or web resource. Upon accessing the website, web-based application 80 automatically (e.g., through saved credentials) or through manual input, communicates an account identifier to the service component 190. In some examples, web-based application 80 can also communicate one or more additional identifiers that correlate to a user identifier.

Additionally, in some examples, the service component 190 can use the user or account identifier of the user identifier to retrieve profile information 109 from a user profile store 166. As an addition or variation, profile information 109 for the user is determined and stored locally on the user's computing device 10. As described with other examples, the user profile information is used to infer an outcome of an input action, based on the inputs of the user with respect to the DUE 125 (such as detected by the input interface 118). For example, the profile information 109 is communicated to the IGDS 100, where the profile information 109 is used to implement and develop the predictive logic 134.

The service component 190 can also retrieve the files of an active workspace ("active workspace files 163") that are linked to the user account or identifier from a file store 164. The profile store 166 can also identify the workspace that is identified with the account and/or user, and the file store 164 can store the data sets that comprise the workspace. The data sets stored with the file store 164 can include, for example, the pages of a workspace, data sets that identify constraints for an active set of workspace files, and one or more data structure representations 161 for the design under edit which is renderable from the respective active workspace files.

Additionally, in examples, the service component 190 provides a representation 159 of the workspace associated with the user to the web-based application 80, where the representation identifies, for examples, individual files associated with the user and/or user account. The workspace representation 159 can also identify a set of files, where each file includes one or multiple pages, and each page including objects that are part of a design interface.

On the user device 10, the user can view the workspace representation through web-based application 80, and the user can elect to open a file of the workspace through web-based application 80. In examples, upon the user electing to open one of the active workspace files 163, web-based application 80 initiates the canvas 122. For example, the IGDS 100 can initiate an HTML 5.0 canvas as a component of web-based application 80, and the rendering engine 120 can access one or more data structures representations 111 of a design interface under edit, to render the corresponding DUE 125 on the canvas 122.

The service component 190 also determines, based on the user credentials, a permission setting or role of the user in connection with the account identifier. The permission settings or role of the user determines, for example, the files which can be accessed by the user. In some examples, the implementation of the rendering engine 120 on the computing device 10 is configured based at least in part on the role or setting of the user.

In examples, the changes implemented by the rendering engine 120 to the DUE 125 can also be recorded with the respective data structure representations 111, as stored on the computing device 10. As described with some examples, the rendering engine 120 can implement changes reflected by user information 127, as well as changes represented by the result data set 169, as generated by the layout engine 160 implementing one or more select layout logic 162. The layout engine 160 can determine the result data set 169 for objects of an object grouping which is linked to a particular layout logic 162, when one or more of the objects are resized or reshaped by user input.

The program interface 102 can repeatedly, or continuously stream change data 121 to the service component 190, wherein the updates reflect edits as they are made to the DUE 125 and to the data structure representation 111 to reflect changes made by the user to the DUE 125 and to the local data structure representations 111 of the DUE 125. The service component 190 can receive the change data 121, which in turn is used to implement changes to the network-side data structure representations 161. In this way, the network-side data structure representations 161 for the active workspace files 163 can mirror (or be synchronized with) the local data structure representations 111 on the user computing device 10. When the rendering engine 120 implements changes to the DUE 125 on the user device 10, the changes can be recorded or otherwise implemented with the local data structure representations 111, and the program interface 102 can stream the changes as change data 121 to the service component 190 in order to synchronize the local and network-side representations 111, 161 of the DUE 125. This process can be performed repeatedly or continuously, so that the local and network-side representations 111, 161 of the DUE 125 remain synchronized.

Additionally, the program interface 102 can record a selected layout logic 162 being applied to a particular object grouping. The active workspace files 163, for example, can include instructions and data (e.g., a file) for a selected layout logic 162. Additionally, the local data structure representations 111 can identify the portion of the DUE 125 for which input information 127 is to be handled by the layout engine 160.

### COLLABORATIVE NETWORK PLATFORM

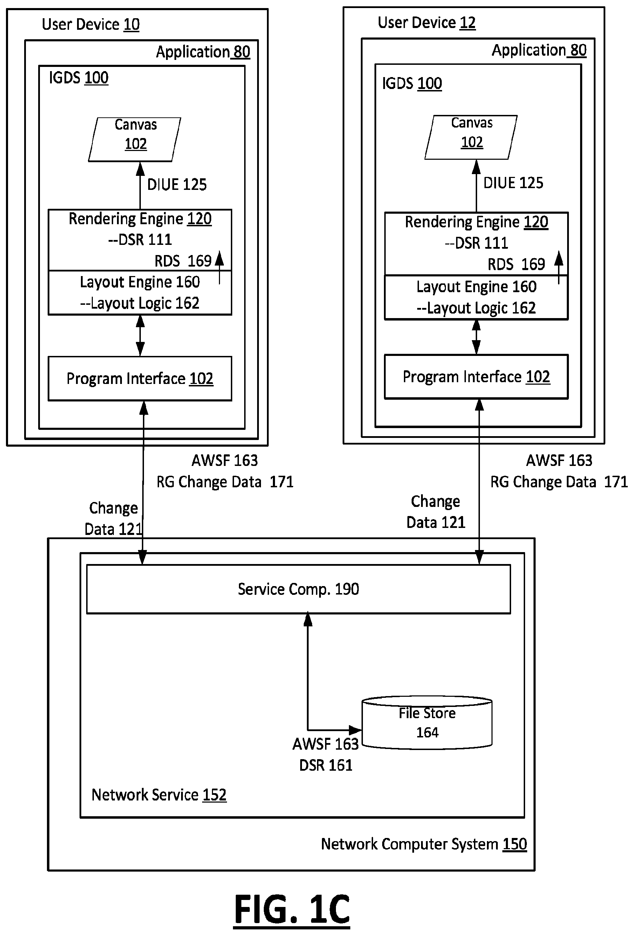

FIG. 1C illustrates a network computing system to implement an interactive graphic design system for multiple users in a collaborative network platform, according to one or more examples. In an example of FIG. 1C, a collaborative network platform is implemented by the network computing system 150, which communicates with multiple user computing devices 10, 12 over one or more networks (e.g., World Wide Web) to implement the IGDS 100 on each computing device. While FIG. 1C illustrates an example in which two users utilize the collaborative network platform, examples as described allow for the network computing system 150 to enable collaboration on design interfaces amongst a larger group of users.

With respect to FIG. 1C, the user computing devices 10, 12 are assumed as being operated by users that are associated with a common account, with each user computing device 10, 12 implementing a corresponding IGDS 100 to access the same workspace during respective sessions that overlap with one another. Accordingly, each of the user computing devices 10, 12 accesses the same set of active workspace files 163 at the same time, with the respective program interface 102 of the IGDS 100 on each user computing device 10, 12 operating to establish a corresponding communication channel (e.g., web socket connection) with the service component 190.

In examples, the service component 190 communicates a copy of the active workspace files 163 to each user computing device 10, 12, such that the computing devices 10, 12 render the DUE 125 of the active workspace files 163 at the same time. Additionally, each of the computing devices 10, 12 maintains a local data structure representation 111 of the respective DUE 125, as determined from the active workspace files 163. The service component 190 also maintains a network-side data structure representation 161 obtained from the files of the active workspace 163, and coinciding with the local data structure representations 111 on each of the computing devices 10, 12.

The network computing system 150 continuously synchronizes the active workspace files 163 on each of the user computing devices. In particular, changes made by users to the DUE 125 on one computing device 10, 12 are immediately reflected on the DUE 125 rendered on the other user computing device 10, 12. By way of example, the user of computing devices 10 makes a change to the respective DUE 125, and the respective rendering engine 120 implements an update that is reflected in the local copy of the data structure representation 111. Additionally, as described with other examples, the layout engine 160 executes selected layout logic 162 for linked object groupings of the DUE 125, and the layout engine 160 communicates the result data set 169 to the rendering engine 120 for implementing updates to the object grouping of the DUE 125. From the computing device 10, the program interface 102 of the IGDS 100 streams change data 121, reflecting the change of the user input, to the service component 190. The service component 190 processes the change data 121 of the user computing device. The service component 190 uses the change data 121 to make a corresponding change to the network-side data structure representation 161. The service component 190 also streams remotely-generated change data 171 (which in the example provided, corresponds or reflects change data 121 received from the user device 10) to the computing device 12, to cause the corresponding IGDS 100 to update the DUE 125 as rendered on that device. The computing device 12 also uses the remotely generated change data 171 to update with the local data structure representation 111 of that computing device 12. The program interface 102 of the computing device 12 receives the update from the network computing system 150, and the rendering engine 120 updates the DUE 125 and the respective local copy of 111 of the computing device 12.

The reverse process can also be implemented to update the data structure representations 161 of the network computing system 150 using change data 121 communicated from the second computing device 12 (e.g., corresponding to the user of the second computing device updating the DUE 125 as rendered on the second computing device 12). In turn, the network computing system 150 can stream remotely generated change data 171 (which in the example provided, corresponds or reflects change data 121 received from the user device 12) to update the local data structure representation 111 of the DUE 125 on the first computing device 10. In this way, the DUE 125 of the first computing device 10 can be updated as a response to the user of the second computing device 12 providing user input to change the DUE 125.

To facilitate the synchronization of the data structure representations 111, 111 on the computing devices 10, 12, the network computing system 150 implements a stream connector to merge the data streams which are exchanged between the first computing device 10 and the network computing system 150, and between the second computing device 12 and the network computing system 150. In some implementations, the stream connector is implemented to enable each computing device 10, 12 to make changes to the network-side data representation 161, without added data replication that is otherwise be required to process the streams from each device separately.

Additionally, over time, one or both of the computing devices 10, 12 may become out-of-sync with the server-side data representation 161. In such cases, the respective computing device 10, 12 can redownload the active workspace files 163, to restart its maintenance of the data structure representation of the DUE 125 that is rendered and edited on that device.

Further, as described by other examples, the layout engine 160 executes selected layout logic 162 to implement a predefined layout configuration amongst a grouping of objects (e.g., parent child object grouping). In this way, the layout engine 160 can execute a select layout logic 162 for a linked object grouping in order to implement and maintain a configuration in which a parent object is resized to maintain a dimensional relationship with respect to one or more of its child objects. For example, the layout configuration provides for a parent object to be set to a dimension that borders, or is slightly larger than the combined or overall dimensions of its child objects (e.g., "hug layout logic"). When a user provides input that changes the combined or overall dimension of the child object, the parent object is resized accordingly, to maintain the set dimensional relationship between the parent object and its child objects.

When layout engine 160 is implemented in a collaborative environment, the IGDS facilitates users of different roles and/or skill-level in collaborating on a given DUE 125. For example, the rendering engine 120 executes the layout logic 160 to enable a user that is highly-skilled and/or whom has primary control ("primary user") of the DUE 125, to select to have a parent/child grouping of objects associated with the layout configuration or behavior. A second user who collaborates on the DUE 125 then enters input that manipulates the child object, without having to perform the additional task of resizing the parent object. Through use of layout engine 160, the primary user controls size and position parameters relating to an object grouping, so as to better control other users (e.g., less-skilled or secondary users) from manipulating the object grouping in a manner that is undesired. In this way, the layout engine 160 enables primary or skilled users to select layout logic 162 to implement quality control in the design of select object groupings.

### METHODOLOGY

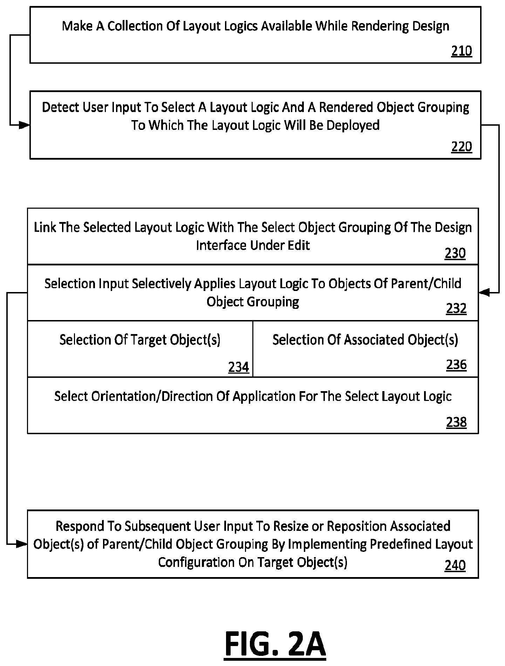

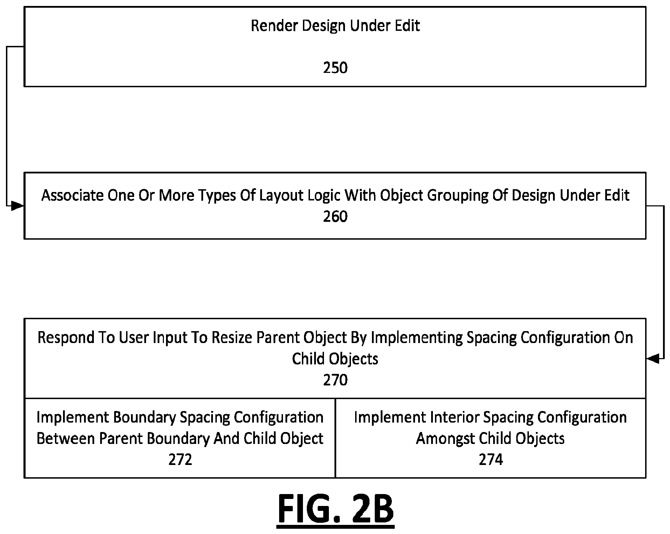

FIG. 2A and FIG. 2B illustrate example methods for providing an interactive graphic design interface, according to one or more examples. Methods such as described by examples of FIG. 2A or FIG. 2B are implemented on, for example, a user computing device that is configured to enable users to generate and edit design interfaces. For example, a method such as described by FIG. 2A or FIG. 2B are implemented by user computing devices on which an integrated graphic design system ("IGDS") such as described with examples of FIG. 1A through FIG. 1C is implemented. Accordingly, reference is made to elements of FIG. 1A through FIG. 1C for purpose of illustrating suitable components for performing a step or sub-step being described.

In examples, the user computing device 10, 12 operates to (i) render a design interface under edit, and (ii) enable the user to edit the design interface under edit. The layout engine 160 operates to make available multiple layout logics 162 in connection with rendering DUE 125 (210). The IGDS 100 provides interactive tools to enable users to select and apply one or more layout logics 162 made available through the layout engine 160, for use with rendered object groupings on a canvas 122. Each layout logic 162 defines target object(s), associated object(s), and a layout configuration, which specifies, for example, spacing, positioning and dimensioning of target objects relative to associated objects and/or other references.

The layout engine 160 detects user input to select a layout logic 162 and a rendered object grouping to which the layout logic 162 is deployed (220). In response to selection input from the user that selects a layout logic 162 of the collection, the IGDS 100 links or otherwise deploys the layout logic 162 with the select object grouping (e.g., parent/child object grouping) (230). When the layout logic 162 is selected and deployed to a select object grouping, execution of the select layout logic 162 identifies (i) a target object set of the object grouping which are to be subject to a predefined layout configuration of the select layout logic 162, and (ii) an associated object set of the object grouping, which, if manipulated (e.g., by dimension or position), triggers the layout engine 160 automatically implement the respective predefined layout configuration on the target object set. As an example, a first type of layout logic 162 (e.g., fill layout logic) is applied to a parent/child object grouping, with a layout configuration that is applied to child object(s) as a response to changes to the parent object of the parent/child grouping. Additionally, as another example, a second type of layout logic 162 (e.g., hug layout) is applied to a parent/child object grouping, with a layout configuration that is applied to a parent object as a response to changes to child object(s) of the parent/child grouping.

In examples, the selection input from the user selectively applies the select layout logic 162 to objects of the parent/child object grouping (232). In some examples, the user provides selection input to select one or more target objects from a larger class of target objects which is subject to the layout configuration of the selected layout logic 162 (234). For example, in the case of fill layout logic, the selection input identifies which of multiple child objects are to be resized or repositioned in response to changes made to the parent object of the grouping.

Additionally, in other examples, the user provides selection input to select one or more associated objects from a larger class of associated objects which could trigger the layout configuration of the selected layout logic 162 to be applied to an identified set of target object(s) (236). For example, in the case of hug layout logic, this selection input identifies which of multiple child objects is resized or repositioned to trigger resizing or repositioning of the parent object of the parent/child object grouping.

Additionally, in some examples, the selection input of the user selects an orientation or direction of application for the select layout logic 162 (238). For example, a user provides selection input (via the interactive tools) to configure the selected layout logic 162 to apply in one of a horizontal orientation, vertical orientation, or horizontal and vertical orientation.

Once a particular layout logic 162 is selected, configured and associated with an object grouping, subsequent user input with regards to the identified associated objects of the object groupings triggers the layout engine 160 to automatically and responsively implement the defined layout configuration on the target object(s) that are identified by the layout logic 162 (240). As described with some examples, the layout engine 160 can resize and/or reposition objects of the object grouping in order to conform the object grouping to the predefined configuration of the select layout logic. In examples, the layout engine 160 communicates the result data set 169 to the rendering engine 120, to cause the rendering engine 120 to implement the changes resulting from implementing the layout configuration on the select object groupings.

With reference to an example of FIG. 2B, the IGDS 100 operates to render a DUE 125 (250). For example, as described with other examples, user computing device 10, 12 includes a rendering engine that renders a design under edit, and further enables the user to provide input to alter the design under edit.

In examples, the IGDS 100 associates one or more types of layout logic with an object grouping of the design under edit (260). For example, layout engine 160 make layout logics available for user selection, and the user selects a particular layout logic to be linked to a particular object grouping.

In examples, the IGDS 100 enables the user to select which layout logic to associate or apply to an object grouping. In implementations, layout logic 162 is associated with object groupings that are triggered with subsequent user input to manipulate one or more objects of the groupings. The layout logic 162 is associated by default, or selected through, for example, user selection via a menu or user interface feature provided by the IGDS 100. In some implementations, the layout object is implemented automatically in response to user input to apply the particular layout logic. In other cases, selection of the layout logic results in the layout logic automatically implementing a particular configuration amongst at least some of the objects of the grouping, as a response to user input to manipulate one or more of the object groupings.

In examples, layout object is associated with a parent/child grouping of objects. The layout object is triggered by user input to resize, for example, a dimension of the parent object, to automatically reconfigure an aspect of the child object(s).

According to some examples, the IGDS 100 responds to a user input to alter a dimension of a parent object from a first value to a second value, and in response to the user input, the IGDS 100 automatically implements a spacing configuration for the child objects (270). The spacing configuration provides that a boundary spacing between at least a first border of the parent object and an adjacent child object to that border is unchanged as the dimension of the parent object is altered from the first value to the second value (272). As an addition or variation, an interior spacing between each adjacent pair of child objects are made (or maintained) equal to one another when the dimension of the parent object is altered to the second value (274).

Accordingly, in examples in which IGDS 100 is implemented in a collaborative environment, a first user provides input to select a first layout logic to associate with a given group of objects. As described with some examples, a corresponding layout configuration is subsequently implemented in response to input provided by a second user with respect to one or more objects of the groupings. For example, a first user can specify a layout logic for a parent/child grouping of objects, where the layout logic implements a spacing configuration for the child objects. Subsequently, a second user can manipulate the parent object of the grouping, to implement the spacing configuration for the child objects.

### EXAMPLES

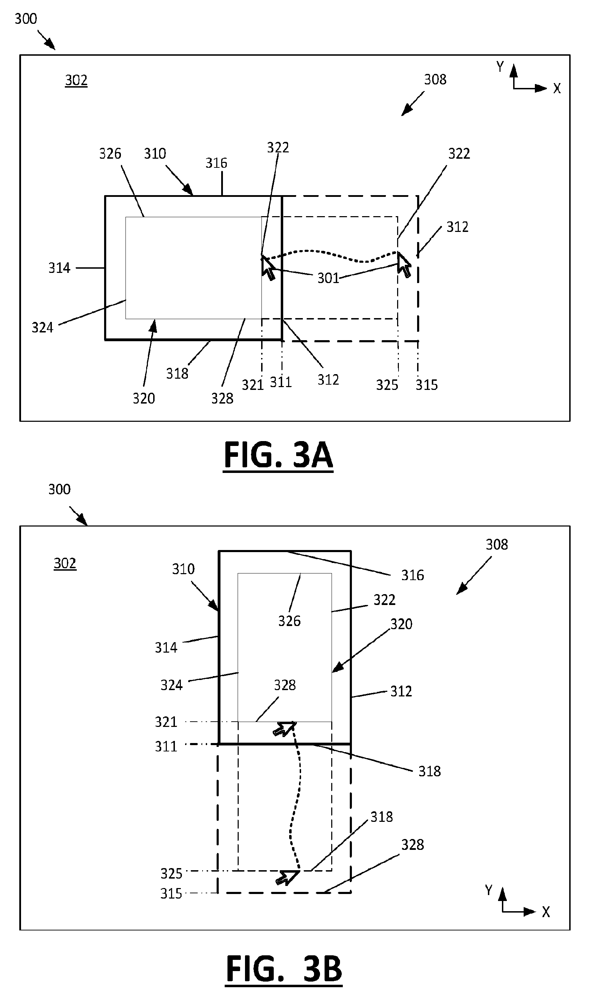

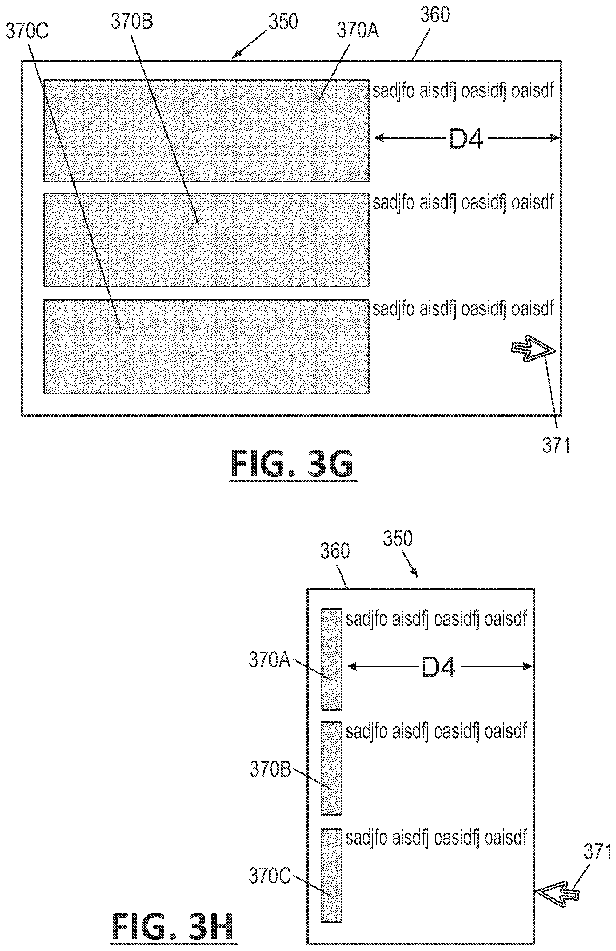

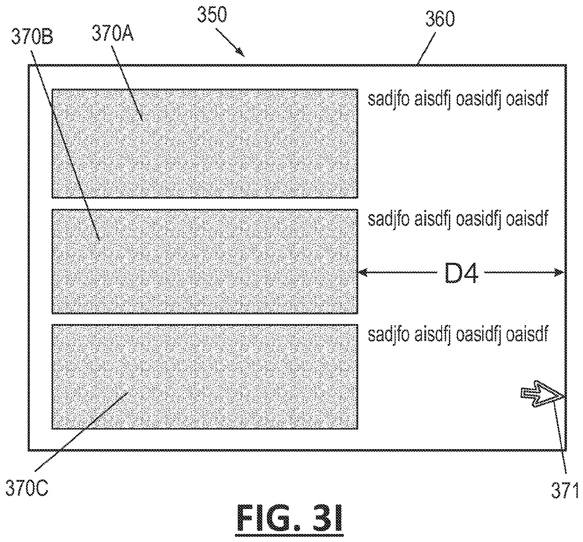

FIG. 3A through FIG. 3I illustrate alternative implementations of layout logic which are provided by an interactive graphic design system, in accordance with one or more examples. In describing examples of FIG. 3A through FIG. 3I, reference is made to elements of FIG. 1A through FIG. 1C for purpose of illustrating suitable components for generating and implementing the user interfaces as described.

FIG. 3A and FIG. 3B illustrate a user interface 300 in which a DUE 308 is rendered on a canvas 302, with an object grouping including a parent object 310 and a child object 320. In an example of FIG. 3A, the object grouping 310, 320 is associated with a layout configuration and behavior that resizes the parent object 310 automatically in response to the child object 320 being resized horizontally (or along the X-axis). In an example shown, the child object 320 is resized (as illustrated by input 301), corresponding to the user selecting and dragging the right boundary 322 of the child object 320 from the original position 321 to the new position 325. As described with other examples, the layout engine 160 executes the layout logic 162 to resize the parent object 310 automatically. As shown, the layout engine 160 automatically resizes the parent object 310 so that the right boundary 312 of the parent object is moved from the original position 311 to the new position 315.

In an example of FIG. 3B, the object grouping 310, 320 is associated with a layout configuration and behavior that resizes the parent object 310 automatically in response to the child object 320 being resized vertically (or along the Y-axis). Thus, if the child object 320 receives user input 301 to move the bottom boundary 328 from the original position 321to a new position 325, the bottom boundary 318 of the parent object 310 is moved from its original position 311 to the new position 315.

In examples of FIG. 3A and FIG. 3B, the spacing between the parent object 310 and the child object 320 is maintained while the child object is being resized. Thus, the distance between the right boundaries 312, 322, the left boundaries 314, 324, the top boundaries 316, 326 and the bottom boundaries 318, 328 of the parent and child objects 310, 320 are unchanged after resizing occurs.

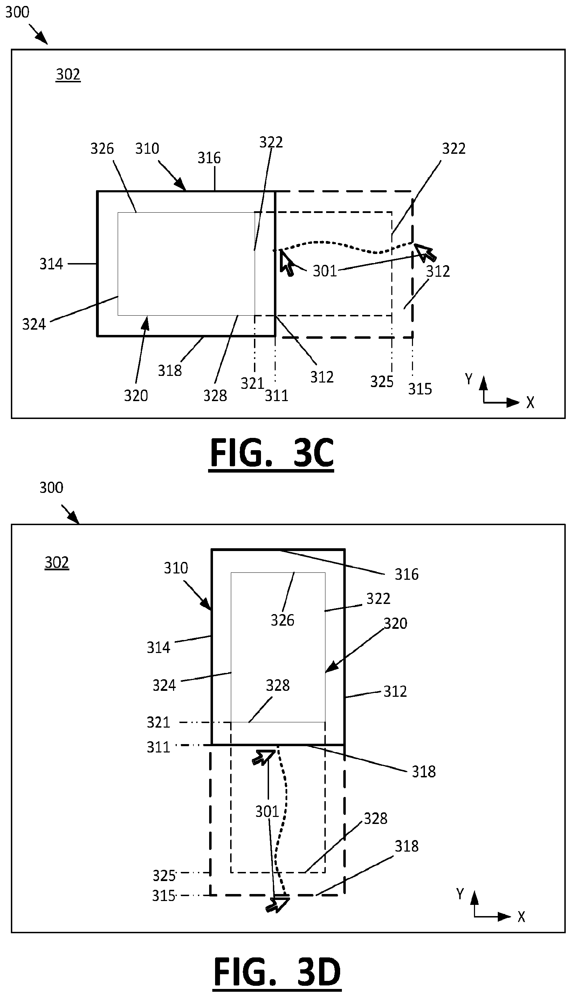

FIG. 3C illustrates a user interface 300 in which the object grouping 310, 320 is associated with a layout configuration and behavior that resizes the child object 310 automatically in response to the parent object 320 being resized horizontally (or along the X-axis) by a user input 301. The user input 301 repositions (e.g., drag) a right boundary 312 of the parent object from an original position 311 to a new position 315. In response, the right boundary 322 of the child object 320 moves from an original position 321 to a new position 325, so that a spacing between the respective right boundaries 312, 322 is maintained when the parent object is resized. In this way, the spacing between the boundaries 312, 314, 316, 318 and 322, 324, 326, 328 of the respective parent 310 and child objects 320 is maintained.

FIG. 3D illustrates a variation of FIG. 3C, when the selected orientation for the layout logic is vertical, rather than horizontal. Accordingly, resize input 301 to reposition the bottom boundary 318 of the parent object 310 from an original position 311 to a new position 315, and the repositioning causes the bottom boundary of the child object 328 to move from the original position 321 to the new position 325. In this way, the spacing between the boundaries 312, 314, 316, 318 and 322, 324, 326, 328 of the respective parent 310 and child objects 320 is maintained.

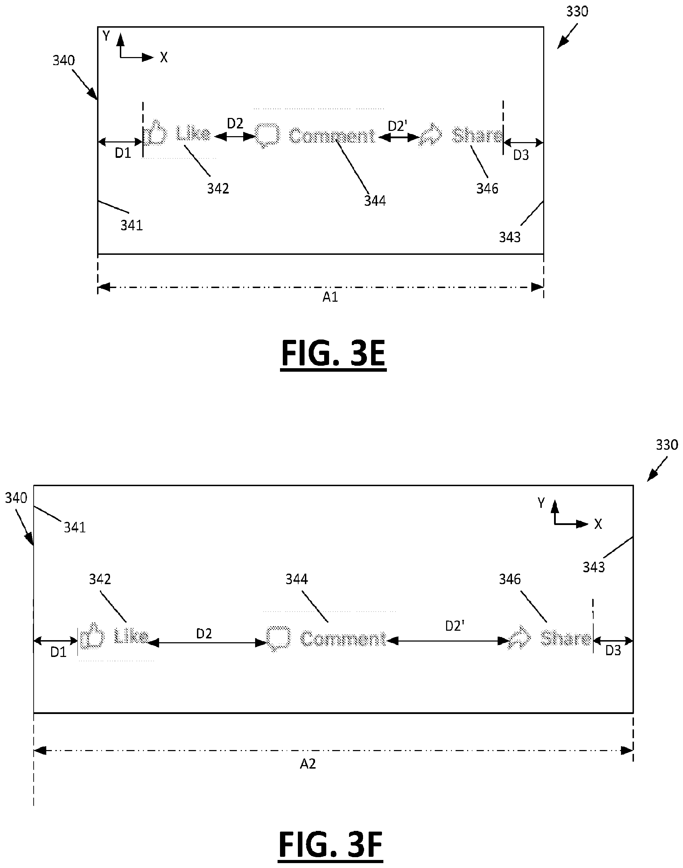

FIG. 3E and FIG. 3F illustrate an implementation of a spacing layout logic, according to one or more examples. With reference to an example of FIG. 3E and FIG. 3F, an object grouping 330 includes a parent object layout logic and a group of child objects 342, 344, 346. As shown, the parent object 340 includes a frame with respective left and right boundary elements 341, 343. The child objects 342, 344, 346 correspond to, for example, icons, active graphic elements, wireframe objects, text objects, imported objects (e.g., social media posts), and other types of graphic elements.

FIG. 3E reflect implementation of a spacing configuration that is implemented by layout engine 160 executing a spacing layout logic, resulting in one or more child objects 342, 344, 346 being fixed relevant to a corresponding boundary 341, 343 of the parent object 340. Accordingly, as shown by FIG. 3E, the separation distance (D1) between left boundary 341 and the most proximate child object 342 is determined by default or by user input. Likewise, the separation distance (D3) between right boundary 343 and the most proximate child object 346 can also be determined by default or by user input. Thus, for example, the separation distance D1 and D3 can be the same or different, based on user input and/or default settings.

Additionally, FIG. 3E illustrates an example in which the child objects 342, 344, 346 of the parent object are evenly spaced from one another. For example, the first user can select layout logic to automatically implement an even spacing configuration amongst adjacent child objects, such as between the left-most child object 342 and middle child object 344(reflected by separation distance D2), and between middle child object 344 and the right-most child object 346 (reflected by separation distance D2'). Thus, execution of layout logic can result in the separation distance between adjacent child objects being equal (D2=D2').

In some examples, the layout logic is associated with the parent/child object groupings 330, such that subsequent input to resize the parent object 340 results in the spacing configurations of the child objects 342, 344, 346 being maintained. In an example shown by FIG. 3E and FIG. 3F, the parent object 340 is resized from a first dimension (A1) (as shown with FIG. 3E) to a second dimension (A2) (as shown with FIG. 3F). As shown in FIG. 3F, the IGDS 100 automatically executes the associated layout logic in response to second input (from the same or different user) to resize the parent object 340. Thus, once the parent object 340 is resized to a new dimension (A2), the child objects 342, 344, 346 are reconfigured by: (i) maintaining a selected fixed separation distance between the left and/or right boundaries 341, 343 and the respective closest child object 342, 346, such that D1 and/or D3 remain unchanged once the parent object 340 is resized; and/or (ii) maintaining even spacing between adjacent child objects 342, 344, 346 such that D2 and D2' remain unchanged once the parent object 310 is resized. The IGDS 100 executes the layout logic to implement one or more spacing configurations in accordance with a particular orientation (e.g., horizontal or vertical orientation). In FIG. 3E and FIG. 3F, for example, the spacing configuration(s) is shows as being implemented along a horizontal orientation. The horizontal orientation may be selected by default, automatically based on a preselected orientation (or alignment) of the parent object or the group of child objects 342, 344, 346 and/or by user preference or input. In other examples, the IGDS 100 can execute layout logic to implement spacing configurations in accordance with a vertical orientation, based on, for example, default settings, user input, and/or an orientation (or alignment) of the parent object 340 or the group of child objects 342, 344, 346.

FIG. 3G through FIG. 3J illustrate another implementation of stretch or fill layout logic, according to one or more examples. An object grouping 350 includes a parent object 360 and child object set 370A, 370B, 370C ("collectively child objects 370" or "child object set 370"). When fill layout logic is deployed, the user can make selections as to an orientation or direction in which the layout logic is applied. In FIG. 3G, the selected orientation for the deployment of the fill layout logic is horizontal. Accordingly, changes to the parent object 360 along the horizontal ( X-axis) automatically result in corresponding changes to the child object set 370 in the same direction. As shown, for example, an input 371 is applied by user to a right boundary of the parent object 360, causing the right boundary to reposition, and the parent object 360 as a whole to resize in the horizontal direction. As input 371 is applied to the right boundary of the parent object 360 to resize (expand and contract) along the X-direction, the child objects are similarly resized in the same direction, so that the spacing D4 between the boundaries of the child objects 370 and the parent object 360 remain the same. The implementation of the particular layout logic in a particular direction (e.g., horizontal) even though the horizontal axis is a counter axis to a direction of an object stack, which is in the vertical or Y direction.

FIG. 3G through FIG. 3I also illustrate that a particular type of layout is configured to include additional configuration, such as additional spacing configuration. For example, as shown, a user specifies that a separation distance between the right boundaries of each of the child objects 370 and a corresponding right boundary of the parent object 360 have a particular spacing value (represented by D4) that includes padding. As shown, implementation of the corresponding layout configuration maintains the spacing D4 (with padding), as the parent object 360 is resized or repositioned.

In an example of FI. 3J, the object grouping is shown to include an additional child object 370D. The input 371 could be applied by the user to a top or bottom boundary of the parent object 360, causing the respective top/bottom boundary to reposition, and the parent object 360 as a whole to resize in the vertical direction. Similar to the case of horizontal resizing, vertical resizing the top or bottom boundary of the parent object 360 causes the child objects 370 to resize in the vertical direction. As illustrated in examples of FIG. 3G-3I, the spacing value (D4) between, for example, the right boundaries of the respective parent and child objects 360, 370 remain fixed in response to the resizing input. Likewise, spacing between the respective top/bottom boundaries of the child objects 370 and the parent object 360 can also be designated to be fixed. As such, examples provide that the spacing between boundaries of parent/child objects 360, 370 remain fixed, rather than change proportionately in relation to the respective change of the parent and child objects.

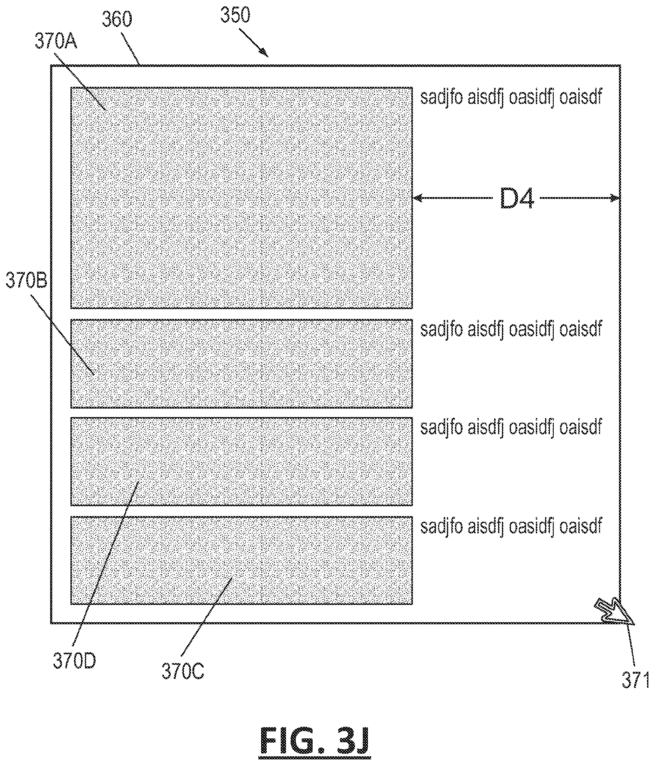

While examples shown with FIG. 3G-3J are described in context of 1-dimensional resize input 371, in variations, the input 371 is received and applied in two dimensions. In other words, the user provides input 371 to resize the parent object 360 in the horizontal and vertical directions, and the child objects 370 resize in both directions, as described by FIG. 3G-3I and FIG. 3J.

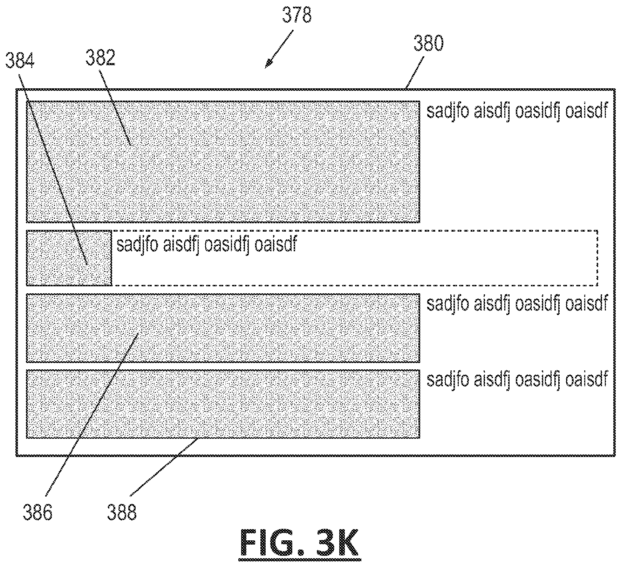

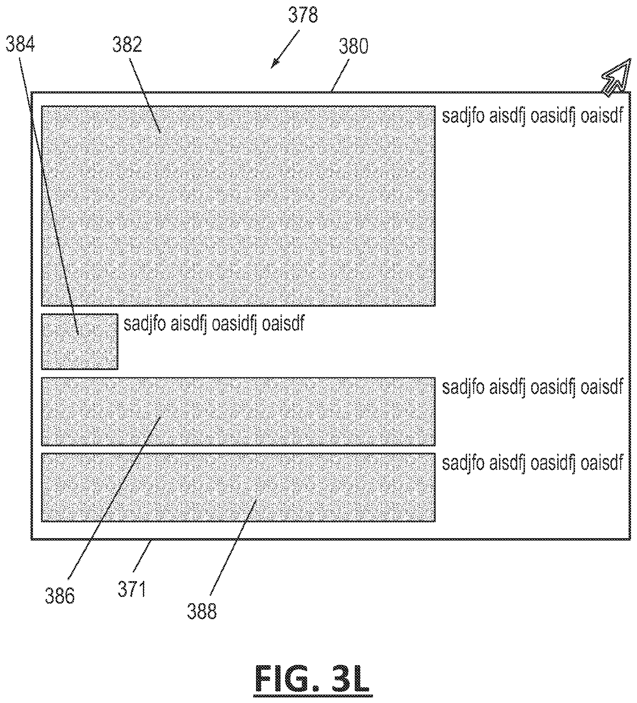

FIG. 3K and 3L illustrates the stretch or fill layout logic, as shown with an example of FIG. 3G through FIG. 3J, configured to resize a select object, rather than all of the child objects. For a parent/child object grouping 378, where parent object 380 includes child objects 382, 384, 386, resize input 381 is received for the parent object 380, causing the parent object 380 to resize in two dimensions. Further in the example shown, each child object 382, 384, 386, 388 is resized in one direction (e.g., horizontal direction). Additionally, a user selection or setting can selectively specify individual child objects 382, 384, 386, 388, such as the first child object 382 as shown, to resize in two directions. Thus, the resize behavior of the child objects 382, 384, 386, 388 can be individually configured to cause the respective child objects to resize in horizontal direction, vertical direction and/or both horizontal and vertical directions, responsively to a corresponding resize input to the parent object 380.

It will be appreciated that numerous similar variations can be implemented by other examples. For example, some child objects 382, 384, 386 may be designated (e.g., with user input) to resize in one direction that can be specified for that particular object, or alternatively, designated to not resize unless another child object is being resized to encroach on a dimension or spacing configuration of the child object.

While examples of FIG. 3G through FIG. 3L are specific to fill layout logic, in variations, the configurations and selections which the user can make (e.g., to apply the layout logic in a particular direction, to specific objects rather than a class of objects which could have the layout logic applied, spacing configuration, etc.) can be applicable to other types of layout logic, such as hug layout logic, wrap layout logic, spacing configuration layout logic and others.

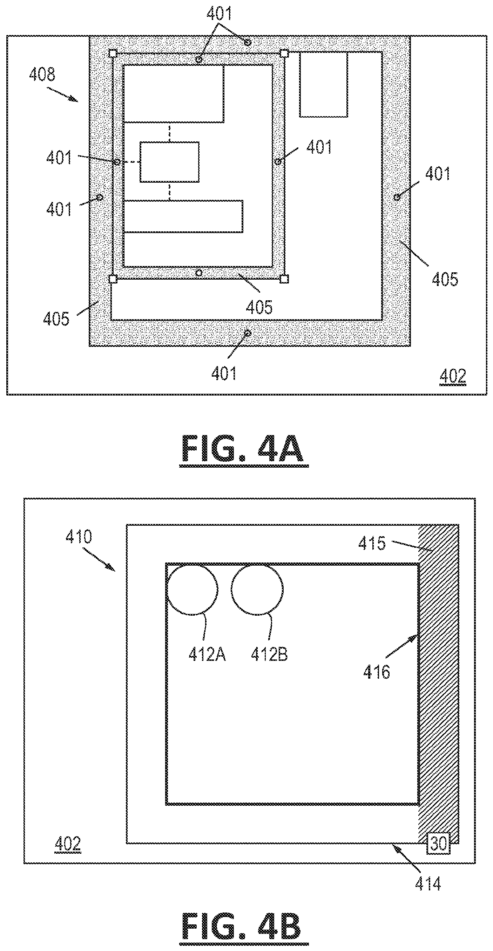

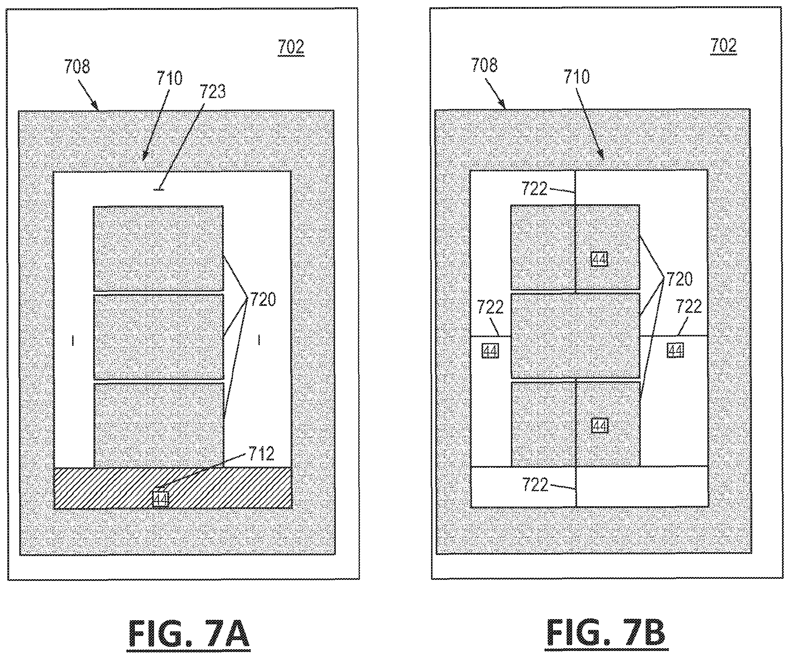

FIG. 4A through FIG. 4H illustrate examples in which spacing layout configurations of object groupings are visualized on a canvas of a design under edit. In particular, examples as shown by FIG. 4A through 4C illustrate object groupings 408, 410 which have layout logic that implements spacing configurations between objects of the object grouping. With reference to FIG. 4A, the IGDS 100, for example, generates a visualization with the object groupings 408 as rendered on a canvas 402, to indicate spacing configurations that exist amongst or between objects of the object grouping. The visualization is in the form of shading 405, coloring or other visual markers, as well as the user of markers 401 or other indicators. As described with other examples, the spacing configurations specify padding, or fixed spacing, which is maintained at a specific amount when objects of an object grouping are resized or repositioned. The spacing configurations can also include dynamic spacing, which is determined on the fly by rules - such as even spacing requirements as illustrated with examples of FIG. 3E and FIG. 3F. According to some examples, the user interact with a canvas 402 in order to visually indicate the spacing configurations amongst (or between) objects of the object grouping 408. For example, spacing configurations (e.g., implemented by layout logic) can be visualized in a different color or shading to the user. Further, spacing configurations can be indicated by the markers 401 to show their existence and respective location. The user can view the spacing configurations through, for example, use of (i) a design tool provided on a side panel of the canvas, (ii) a shortcut key which the user can activate by, for example pressing and holding, and/or (iii) a canvas tool, such as described with FIG. 7A and FIG. 7B.

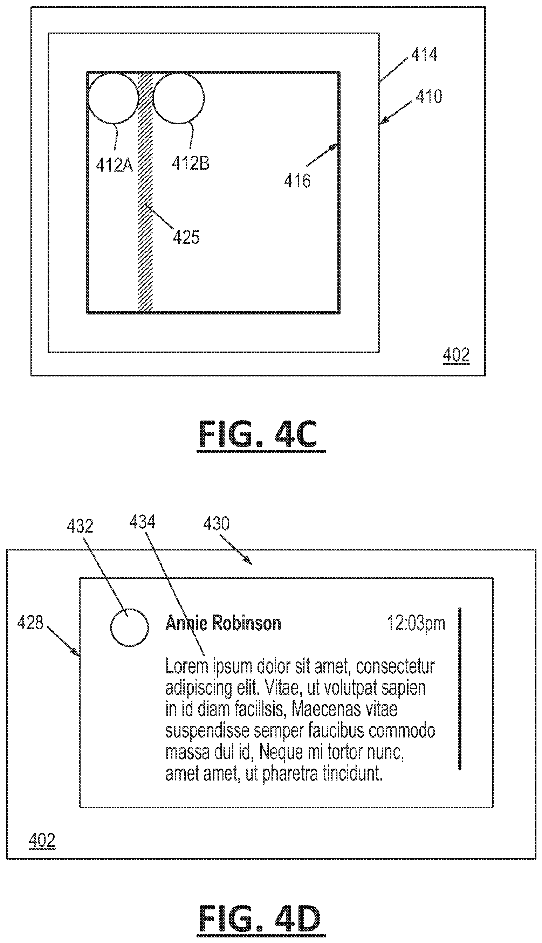

With reference to FIG. 4B and FIG. 4C, a visualization is displayed for the object grouping 410. As shown, the visualization is in a form of a colored or shaded band 415, to indicate a spacing configuration as between an outer parent object 414 and a child object 416. child objects 412A, 412B of a parent object 414 the object grouping 410. In the particular example, the visualization band 415 indicates the spacing configuration between a child object 422 and parent object 424. In FIG. 4C, a colored or shaded band 425 indicates the spacing configuration between adjacent objects, such as adjacent child objects 412A, 412B of a corresponding parent object 416.

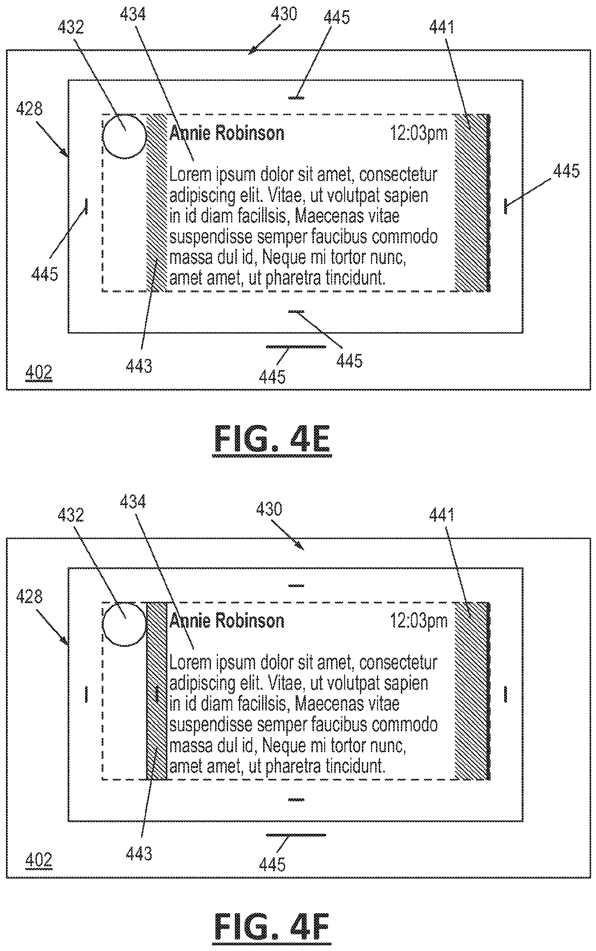

FIG. 4D and FIG. 4E illustrate the use of additional visualization to indicate spacing of objects, according to one or more examples. In FIG. 4D, a first object 432 (e.g., circle) is shown to be positioned adjacent to a second object 434 (e.g., text box) on the canvas 402. Both objects 432, 434 can be provided within a corresponding parent object 428, to form an object grouping 430. As shown in FIG. 4D, the rendering engine 120 displays by default the canvas 402 and object groupings 430 without any visualization that indicates the presence of a spacing configuration between individual objects of that grouping. In an example of FIG. 4E, the user provides hover input near and/or over the object groupings 430, or alternatively, near or over specific objects of the object grouping 430, to cause the rendering engine 120 to display one or more visualizations that indicate existing spacing configurations between the respective objects. For example, in FIG. 4E, the rendering engine 120 is shown to display (i) a band 441 to visualize a spacing configuration that exists between object 434 and parent object 428, (ii) a band 443 to visualize a spacing configuration that exists between child objects 432, 434, and (iii) one or more markers 445 that indicate a spacing configuration between the parent object 428 and the child objects 432, 434 (or a sub-parent object for child objects 432, 434).

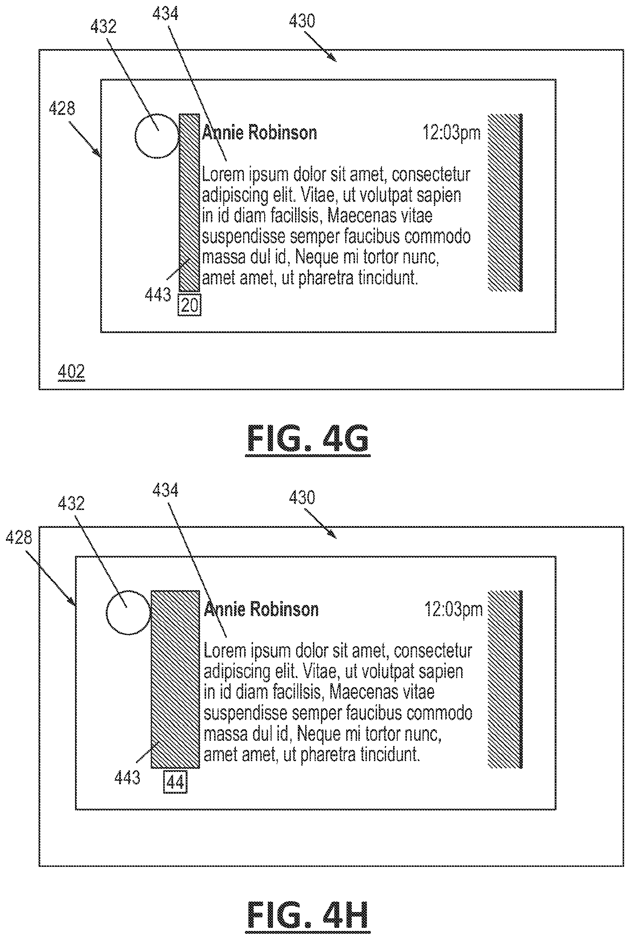

In examples, the user can further interact with the object grouping 430 on the canvas 402 to reconfigure one or more of the spacing configurations. In FIG. 4F through FIG. 4H, the IGDS 100 enables an embedded or on-canvas tool that allows the user to view and reconfigure spacing configurations between object. The tool can, for example, enable user interaction that can include positioning the pointer over one of the spacing configurations (e.g., the band 443) to make the band selectable (FIG. 4F). When made selectable, the user can provide additional input to alter the spacing configuration represented by the band 443 (FIG. 4G). For example, the user can provide input to make the boundaries selectable (e.g., FIG. 4G), and further to move the boundaries in a given direction (FIG. 4H).

Accordingly, as shown, some examples allow for the user to alter spacing configurations when the spacing configurations are visualized on the canvas. In this way, the user can reconfigure a particular layout logic such that the layout configuration includes updated spacing, as indicated by the user through his interaction with the design interface. In examples in which a tool is embedded or otherwise provided with the canvas, the user can alter the spacing configurations as between objects, and also for a particular layout logic that is applied to the object grouping, through interaction with the embedded tool of the canvas. This type of interaction is more fluid and intuitive for the user. Examples recognize that design users are sometimes inconvenienced when having to interact with a tool panel. Accordingly, the rendering engine 120 enables an embedded or on-canvas tool such as described with examples of FIG. 4A through FIG. 4H to enable the user to view and reconfigure spacing configurations.

In examples, spacing configurations of one or more layout logics also be displayed as part of the tools provided on a side panel of the canvas 122. In examples, a tool panel (e.g., sidebar to canvas 402) is synchronized with the spacing configurations, so that individual tools provide the user with direct access values of the existing spacing configurations of a design on the canvas 402. Furthermore, the tool panel enables the existing values of the spacing configurations to be viewable.

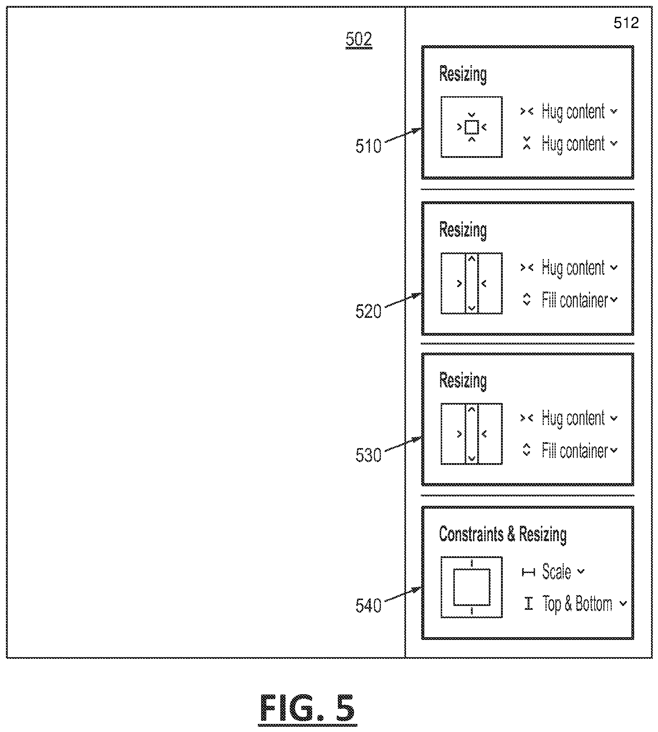

FIG. 5 illustrates example design tools for selecting and implementing layout logic for individual objects of object groupings. The IGDS 100 generates layout configuration tools 510, 520, 530, 540 (collectively "design tools") that enable users to select layout configuration logic for object groupings of a given canvas 502. In some implementations, the layout configuration tools 510, 520, 530, 540 can be provided on an as-needed basis, where each layout configuration tool 510, 520, 530, 540 is associated with a corresponding object grouping on the canvas 502. For example, each layout configuration tool 510, 520, 530, 540 is associated with object groupings of a given layer, level or position on the canvas 502. The user further provides input to specify the properties for the tool, which coincide with the configuration that is to be implemented by target objects (or objects that are automatically resized, repositioned or reconfigured based on input for another object) of the respective object grouping. The user can specify the properties of the individual layout configuration tools using, for example, pulldown menus, text input boxes or other similar feature. By way of example, the properties for each layout configuration tool 510, 520, 530, 540 can specify (i) the target objects that are to be reconfigured based on user input that reconfigures another object, (ii) the type of behavior or layout operation that is to be automatically implemented by the target objects, and/or (iii) values for use in reconfiguring the target objects. For example, the user can specify a 'hug' property for a given object, meaning the object is to be resized based on its child objects being resized (e.g., by user input). The user can alternatively specify "fill" property for a given object (or object set), meaning the object is to resize relative to its parent object being resized. As an addition or variation, the properties can specify spacing configurations, such as "fixed spacing" or "even spacing" configurations.

Accordingly, example design tools enable a user to select layout configuration logic for object groupings, so as to configure layout object for orientation, spacing and other attributes. Additionally, the respective design tools can identify the target objects for implementation of the layout configuration logic. Additionally, some examples enable for different objects of a common object grouping to be linked with different types of layout configuration logic. For example, child objects of a common parent child object grouping may be associated with a different layout configuration logic as those associated with the parent object.

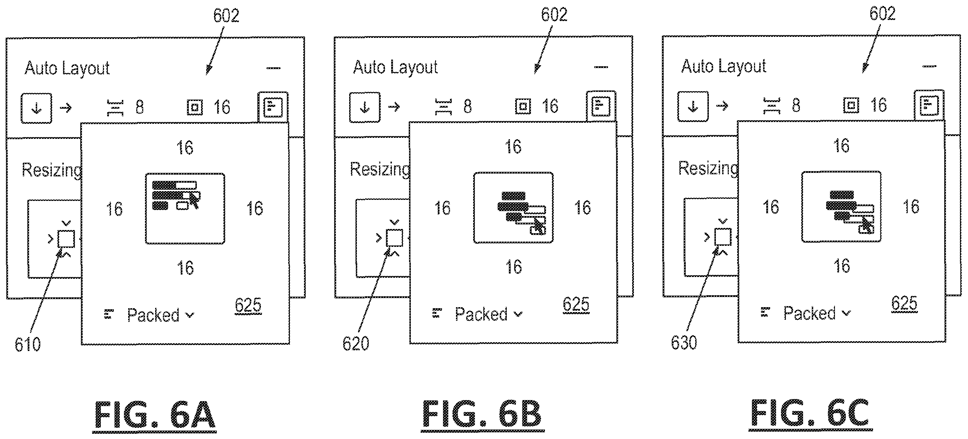

FIG. 6A through FIG. 6C illustrates use of a multi-state design tool that provides a preview of the design tools next state, according to one or more examples. A multistate design tool 610, 620, 630 is provided as part of a tool bar 602 to associate a particular state with a configuration of an object or object grouping. For example, a layout for a given object or a set of objects includes different types of justification. A user's selection of a particular type of justification reflects the design tool's current state. If the user interacts with the design tool and initiates a selection to another state, the interactive design tool displays or provide preview 625, which indicates a representation of the next state which the user selection will make. Alternatively, the user selection can indicate or choose one of the states of the interactive design tool, and the preview reflects the choice to the user before the user has committed to the choice. In the examples shown by FIG. 6A through FIG. 6C, the multi-state tools 610, 620, 630 correspond to layout configuration tools, such as shown in examples of FIG. 5. Accordingly, the multi-state tools 610, 620, 630 indicate the next state of an object or set of objects, based on layout configuration logic that is associated with the particular object or set of objects. In this way, the respective previews 625 show how the target objects implement the layout configuration logic as a response to a particular type of input.

FIG. 7A and FIG. 7B illustrate implementation of an interactive design tool that is embedded with a canvas on which a design under edit is rendered. The canvas 702 includes an object grouping 708, including parent object 710 and child object sets 720. The interactive design tool provides visualizations of spacing configurations 712, 722 amongst the groupings of objects 708 that are rendered on a canvas 702. The spacing configurations reflect a layout configuration of a linked layout logic, as well as the spacing between objects which are not be grouped are linked to a particular layout logic. The user can interact with the tool, which is embedded to receive input directed to the canvas 702 (e.g., pointer can be hovered over or near the areas of the spacing configurations). The user interactions can include for example, the user clicking and dragging to increase/decrease spacing configurations between objects and implementing the change with respect to the particular layout logic for future implementation or execution of that logic.

In some variations, the embedded tool displays number reflecting a quantity or amount of the spacing. The user can further interact with the number in order to change the spacing configuration of the particular configuration layout.

Still further, in some examples, an object grouping is associated with a first type of layout logic. The IGDS 100 includes a design tool, such as an embedded canvas tool, to enable the user to toggle between the current layout logic (e.g., the first type of layout logic) and one or more alternative layout configurations provided by different types of layout logic. For example, a user can toggle between a hug layout configuration and a stretch layout configuration using a toggle feature provided as an interactive tool or a tool embedded with the canvas. The toggling causes, for example, the layout engine 160 to implement the alternative types of layout logic, with each layout logic resulting in the object grouping being shown to have a different layout configuration. In this way, the user can view the effects of applying different types of layout logic to an object grouping.

### NETWORK COMPUTER SYSTEM

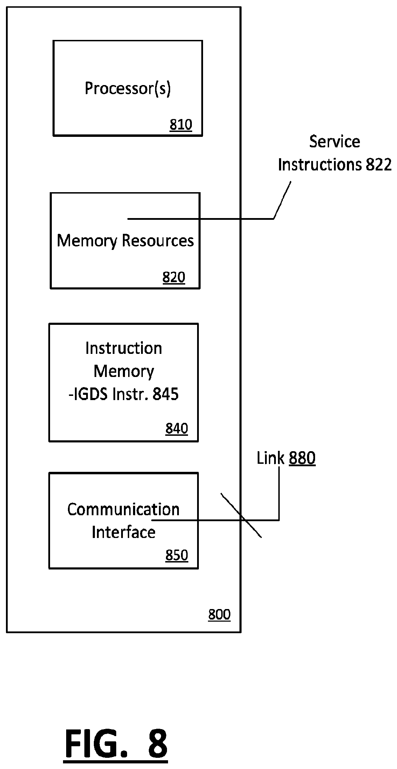

FIG. 8 illustrates a computer system on which one or more embodiments are implemented. A computer system 800 is implemented on, for example, a server or combination of servers. For example, the computer system 800 is implemented as the network computing system 150 of FIG. 1B and FIG. 1C.

In one implementation, the computer system 800 includes processing resources (or processor(s)) 810, memory resources 820 (e.g., read-only memory (ROM) or random-access memory (RAM)), one or more instruction memory resources 840, and a communication interface 850. The computer system 800 includes at least one processor 810 for processing information stored with the memory resources 820, such as provided by a random-access memory (RAM) or other dynamic storage device, for storing information and instructions which are executable by the processor(s) 810. The memory resources 820 may also be used to store temporary variables or other intermediate information during execution of instructions to be executed by processor(s) 810.

The communication interface 850 enables the computer system 800 to communicate with one or more user computing devices, over one or more networks (e.g., cellular network) through use of the network link 880 (wireless or a wire). Using the network link 880, the computer system 800 can communicate with one or more computing devices, specialized devices and modules, and/or one or more servers.

In examples, processor(s) 810 execute instructions, stored with the memory resources 820, in order to enable the network computing system to implement the network service 152 and operate as the network computing system 150 in examples such as described with FIG. 1A through FIG. 1C.

The computer system 800 may also include additional memory resources ("instruction memory 840") for storing executable instruction sets ("IGDS instructions 845") which are embedded with web-pages and other web resources, to enable user computing devices to implement functionality such as described with the IGDS 100.

As such, examples described herein are related to the use of the computer system 800 for implementing the techniques described herein. According to an aspect, techniques are performed by the computer system 800 in response to the processor(s) 810 executing one or more sequences of one or more instructions contained in the memory resources 820. Such instructions may be read into the memory resources 820 from another machine-readable medium. Execution of the sequences of instructions contained in memory resources 820 causes the processor(s) 810 to perform the process steps described herein. In alternative implementations, hard-wired circuitry may be used in place of or in combination with software instructions to implement examples described herein. Thus, the examples described are not limited to any specific combination of hardware circuitry and software.

### USER COMPUTING DEVICE

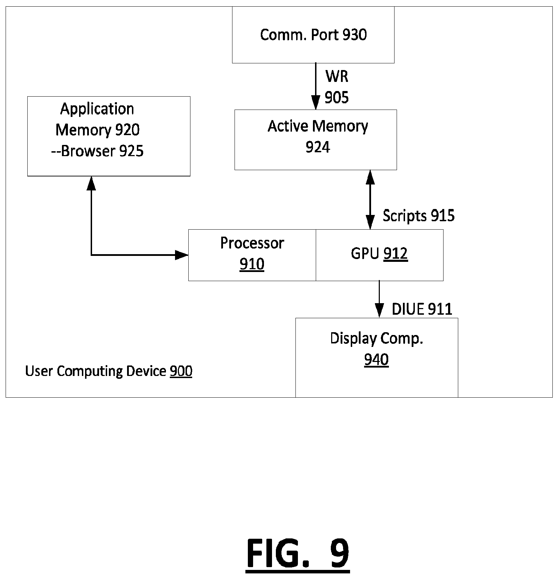

FIG. 9 illustrates a user computing device for use with one or more examples, as described. In examples, a user computing device 900 can correspond to, for example, a work station, a desktop computer, a laptop or other computer system having graphics processing capabilities that are suitable for enabling renderings of design interfaces and graphic design work. In variations, the user computing device 900 can correspond to a mobile computing device, such as a smartphone, tablet computer, laptop computer, VR or AR headset device, and the like.

In examples, the computing device 900 includes a central or main processor 910, a graphics processing unit 912, memory resources 920, and one or more communication ports 930. The computing device 900 can use the main processor 910 and the memory resources 920 to store and launch a browser 925 or other web-based application. A user can operate the browser 925 to access a network site of the network service 152, using the communication port 930, where one or more web pages or other resources for the network service 152 (see FIG. 1A through FIG. 1C) can be downloaded. The web resources 905 can be stored in the active memory 924 (cache).

As described by various examples, the processor 910 detects and execute scripts and other logic which are embedded in the web resource in order to implement the IGDS 100 (see FIG. 1A through FIG. 1C). In some of the examples, some of the scripts 915 which are embedded with the web resources 905 include GPU accelerated logic that is executed directly by the GPU 912. The main processor 910 and the GPU combine to render a design interface under edit ("DUE 911") on a display component 940. The rendered design interface includes web content from the browser 925, as well as design interface content and functional elements generated by scripts and other logic embedded with the web resource 905.By including scripts 915 that are directly executable on the GPU 912, the logic embedded with the web resource 915 better executes the IGDS 100, as described with various examples.

### CONCLUSION

Although examples are described in detail herein with reference to the accompanying drawings, it is to be understood that the concepts are not limited to those precise examples. Accordingly, it is intended that the scope of the concepts be defined by the following claims. Furthermore, it is contemplated that a particular feature described either individually or as part of an example can be combined with other individually described features, or parts of other examples, even if the other features and examples make no mentioned of the particular feature. Thus, the absence of describing combinations should not preclude having rights to such combinations.

## Claims

1. A computer implemented method comprising:
making a collection of layout logics (162) available in connection with a design interface under edit (125, 911) that is rendered on a user device (10), wherein each layout logic of the collection (162) is executable to implement a predefined layout configuration in response to one or more predefined triggers of that layout logic, the collection of layout logics including a first layout logic that implements a first layout configuration identifying a relative dimensional relationship amongst a linked object set where a target set of objects of the linked object set is resized in response to input that resizes an associated set of objects of the linked object set;
based on user input, linking the first layout logic with a parent/child object grouping (330), the parent/child object grouping (330) including at least one parent object (340) and one or more child objects (342, 344, 346) that are positioned within a frame of the parent object (340);
detecting input to resize at least a first object of the parent/child object grouping (330) that is one of the associated object set of the first layout logic; in response to detecting the input, automatically implementing the first layout logic by resizing at least a second object of the parent/child object grouping (330) that is one of the target object sets, so as to maintain the relative dimensional relationship identified by the first layout configuration.

2. The method of claim 1, wherein the first layout logic is a fill layout logic to resize a set of child objects (342, 344, 346) of the linked parent/child object grouping (330) in response to input that resizes a parent object (340) of the linked parent/child object grouping (330).

3. The method of claim 1, wherein the first layout logic is a hug layout logic to resize a parent object (340) of the linked parent/child object grouping (330) in response to input that resizes a set of child objects (342, 344, 346) of the linked parent/child object grouping (330).

4. The method of claim any of the preceding claims, wherein the collection of layout logics (162) includes a spacing layout logic that implements a spacing configuration between select objects of the linked object set, and wherein the method further comprises in response to detecting the user input, automatically implementing the spacing layout logic by maintaining the spacing configuration amongst objects of the linked object set.

5. The method of claim 4, wherein the spacing layout configuration identifies a predetermined spatial relationship between at least a boundary of the parent object (340) and a boundary of the one or more child objects (342, 344, 346).

6. The method of claims 4 or 5, wherein automatically implementing the spacing layout logic includes maintaining a predetermined spatial relationship between one or more child objects (342, 344, 346) of the parent/child object grouping (330).

7. The method of any of the claims 1 through 3, wherein the method further comprises selectively applying, in response to user input, the first layout logic to one or more objects of the parent/child object grouping (330), but not all of the objects of the parent/child grouping (330).

8. The method of claim 6, wherein maintaining the predetermined spatial relationship includes maintaining an interior spacing between each adjacent pair of child objects (342, 344, 346) of the parent/child object grouping (330) to be equal to one another.

9. The method of claim 8, wherein maintaining the predetermined spatial relationship includes maintaining a boundary spacing between at least a first border of the parent object (340) of the parent/child object grouping (330) and a border of an adjacent child (342, 344, 346) of the parent/children object grouping (330).

10. The method of any of the preceding claims, wherein the first layout logic is automatically implemented in either one of a horizontal direction or a vertical direction.

11. The method of any of claims 1 through 3, wherein the first layout logic is automatically implemented in the horizontal and vertical directions.

12. The method of claims 1 through 3, wherein a user input to link the first layout logic with the parent/child object grouping (330) is from a first user, and an input to resize at least the first object of the parent/child object grouping (330) is from a second user.

13. The method of claims 4, 5, 8 or 9, wherein the spacing layout logic implements a dynamic spacing between objects of the parent/child grouping (330).

14. The method of any of the preceding claims, further comprising:
providing an interactive feature to enable a user to select one or more of the layout logics of the collection to link to the parent/child object grouping (330), the feature enabling the user to toggle between the first layout configuration and a second layout configuration, wherein the first layout configuration corresponds to one of a hug layout configuration or a fill layout configuration and the second layout configuration corresponds to the another one of the hug layout configuration or the fill layout configuration.

15. The method of any of the preceding claims, wherein the method is implemented by transmitting computer-readable instructions for performing the method to another computing device.

16. A network computer system comprising:
a memory sub-system to store a set of instructions;
one or more processors that operate to communicate the set of instructions to a plurality of user devices (10), wherein the set of instructions include instructions that when executed by one or more devices of a plurality of devices, cause the one or more devices to perform a method of any of the preceding claims.

17. A non-transitory computer-readable medium that stores instructions, which when executed by one or more processors of a computer system, cause the computer system to perform a method of any of the preceding claims.

## Patentansprüche

1. Computerimplementiertes Verfahren, umfassend:
Erstellen einer Sammlung von Layoutlogiken (162), die in Verbindung mit einer Entwurfsschnittstelle in Bearbeitung (125, 911) verfügbar ist, die auf einem Benutzergerät (10) wiedergegeben wird, wobei jede Layoutlogik der Sammlung (162) ausführbar ist, um eine vordefinierte Layoutkonfiguration als Antwort auf einen oder mehrere vordefinierte Trigger dieser Layoutlogik zu implementieren, die Sammlung der Layoutlogiken schließt dabei eine erste Layoutlogik ein, die eine erste Layoutkonfiguration implementiert, die eine relative dimensionale Beziehung zwischen einem verbundenen Objektsatz identifiziert, bei dem ein Zielsatz von Objekten des verbundenen Objektsatzes in der Größe angepasst wird, als Reaktion auf die Eingabe, die einen zugehörigen Objektsatz des verbundenen Objektsatzes in der Größe anpasst;
basierend auf einer Benutzereingabe, die die erste Layoutlogik mit einer Elternteil/Kind-Objektgruppierung (330) verbindet, wobei die Elternteil/Kind-Objektgruppierung (330) mindestens ein Elternteilobjekt (340) und ein oder mehrere Kindobjekte (342, 344, 346) einschließt, die innerhalb eines Rahmens des Elternteilobjekts (340) positioniert sind;
Erfassen der Eingabe zum Anpassen der Größe eines ersten Objekts der Elternteil/Kind-Objektgruppierung (330), das eines des zugehörigen Objektsatzes der ersten Layoutlogik ist; als Reaktion auf das Erfassen der Eingabe, automatisches Implementieren der ersten Layoutlogik durch Anpassen der Größe mindestens eines zweiten Objekts der Elternteil/Kind-Objektgruppierung (330), das eines der Zielobjektsätze ist, um die durch die erste Layoutkonfiguration identifizierte relative dimensionale Beziehung beizubehalten.

2. Verfahren nach Anspruch 1, wobei die erste Layoutlogik eine Füll-Layoutlogik ist, um die Größe eines Satzes von Kindobjekten (342, 344, 346) der verbundenen Elternteil/Kind-Objektgruppierung (330) anzupassen, als Reaktion auf die Eingabe, die ein Elternteilobjekt (340) der verbundenen Elternteil/Kind-Objektgruppierung (330) in der Größe anpasst.

3. Verfahren nach Anspruch 1, wobei die erste Layoutlogik eine Umarmungs-Layoutlogik ist, um die Größe eines Elternteilobjektes (340) der verbundenen Elternteil/Kind-Objektgruppierung (330) in der Größe anzupassen, als Reaktion auf die Eingabe, die einen Satz von Kindobjekten (342, 344, 346) der verbundenen Elternteil/Kind-Objektgruppierung (330) in der Größe anpasst.

4. Verfahren nach einem der vorstehenden Ansprüche, wobei die Sammlung von Layoutlogiken (162) eine Abstands-Layoutlogik einschließt, die eine Abstandskonfiguration zwischen ausgewählten Objekten des verbundenen Objektsatzes implementiert, und wobei das Verfahren ferner, als Reaktion auf das Erfassen der Benutzereingabe, das automatische Implementieren der Abstands-Layoutlogik umfasst, indem die Abstandskonfiguration zwischen Objekten des verbundenen Objektsatzes beibehalten wird.

5. Verfahren nach Anspruch 4, wobei die Abstand-Layoutkonfiguration eine vorbestimmte räumliche Beziehung zwischen mindestens einer Grenze des Elternteil-Objekts (340) und einer Grenze des einen oder der mehreren Kindobjekte (342, 344, 346) identifiziert.

6. Verfahren nach Anspruch 4 oder 5, wobei das automatische Implementieren der Abstand-Layoutlogik einschließt, eine vorbestimmte räumliche Beziehung zwischen einem oder mehreren Kindobjekten (342, 344, 346) der Elternteil/Kind-Objektgruppierung (330) beizubehalten.

7. Verfahren nach einem der Ansprüche 1 bis 3, wobei das Verfahren ferner das selektive Anwenden, als Reaktion einer Benutzereingabe, der ersten Layoutlogik auf ein oder mehrere Objekte der Elternteil/Kind-Objektgruppierung (330), aber nicht alle der Objekte der Elternteil/Kind-Objektgruppierung (330), umfasst.

8. Verfahren nach Anspruch 6, wobei das Beibehalten der vorbestimmten räumliche Beziehung das Beibehalten eines inneren Abstands zwischen jedem benachbarten Paar von Kindobjekten (342, 344, 346) der Elternteil/Kind-Objektgruppierung (330) einschließt, damit sie einander gleich sind.

9. Verfahren nach Anspruch 8, wobei das Beibehalten der vorbestimmten räumlichen Beziehung das Beibehalten eines Grenzabstands zwischen mindestens einer ersten Grenze des Elternteilobjekts (340) der Elternteil/Kind-Objektgruppierung (330) und einer Grenze eines benachbarten Kindes (342, 344, 346) der Elternteil/Kind-Objektgruppierung (330) einschließt.

10. Verfahren nach einem der vorstehenden Ansprüche, wobei die erste Layoutlogik automatisch in entweder einer horizontalen Richtung oder einer vertikalen Richtung implementiert wird.

11. Verfahren nach einem Ansprüche 1 bis 3, wobei die erste Layoutlogik automatisch in die horizontale und vertikale Richtung implementiert wird.

12. Verfahren nach Anspruch 1 bis 3, wobei eine Benutzereingabe zum Verbinden der ersten Layoutlogik mit der Elternteil/Kind-Objektgruppierung (330) von einem ersten Benutzer stammt und eine Eingabe zum Anpassen der Größe mindestens des ersten Objekts der Elternteil/Kind-Objektgruppierung (330) von einem zweiten Benutzer stammt.

13. Verfahren nach den Ansprüchen 4, 5, 8 oder 9, wobei die Abstand-Layoutlogik einen dynamischen Abstand zwischen Objekten der Elternteil/Kind-Objektgruppierung (330) implementiert.

14. Verfahren nach einem der vorstehenden Ansprüche, ferner umfassend: Bereitstellen einer interaktiven Eigenschaft, um einen Benutzer in die Lage zu versetzen, eine oder mehrere der Layoutlogiken der Sammlung auszuwählen, um sie mit der Elternteil/Kind-Objektgruppierung (330) zu verbinden, wobei es die Eigenschaft dem Benutzer ermöglicht, zwischen der ersten Layoutkonfiguration und einer zweiten Layoutkonfiguration hin- und herzuschalten, wobei die erste Layoutkonfiguration entweder einer Umarmungs-Layoutkonfiguration oder einer Füll-Layoutkonfiguration entspricht und die zweite Layoutkonfiguration der anderen der Umarmungs-Layoutkonfiguration oder der Füll-Layoutkonfiguration entspricht.

15. Verfahren nach einem der vorstehenden Ansprüche, wobei das Verfahren durch Übertragen computerlesbarer Anweisungen implementiert wird, um das Verfahren auf einem anderen Computergerät auszuführen.

16. Netzwerk-Computersystem umfassend:
Ein Speicher-Subsystem, um einen Satz von Anweisungen zu speichern; einen oder mehrere Prozessoren, die den Satz von Anweisungen an eine Vielzahl von Benutzergeräten (10) kommunizieren, wobei der Satz von Anweisungen solche Anweisungen einschließt, die, wenn sie von einem oder mehreren Geräten einer Vielzahl von Geräten ausgeführt werden, das eine oder die mehreren Geräte veranlassen, ein Verfahren nach einem der vorstehenden Ansprüche auszuführen.

17. Nichtflüchtiges, computerlesbares Medium, das Anweisungen speichert, die wenn sie von einem oder mehreren Prozessoren eines Computersystems ausgeführt werden, das Computersystem veranlassen, ein Verfahren nach einem der vorstehenden Ansprüche auszuführen.

## Revendications

1. Procédé mis en œuvre par ordinateur comprenant :
le fait de rendre disponible une collection (162) de logiques de disposition en relation avec une interface (125, 911) de conception en cours d'édition qui est rendue sur un dispositif utilisateur (10), chaque logique de disposition de la collection (162) étant exécutable pour mettre en œuvre une configuration de disposition prédéfinie en réponse à un ou plusieurs déclencheurs prédéfinis de cette logique de disposition, la collection de logiques de disposition comprenant une première logique de disposition qui met en œuvre une première configuration de disposition identifiant une relation dimensionnelle relative parmi un ensemble d'objets liés où un ensemble cible d'objets de l'ensemble d'objets liés est redimensionné en réponse à une entrée qui redimensionne un ensemble associé d'objets de l'ensemble d'objets liés ;
en fonction de l'entrée utilisateur, le fait de lier la première logique de disposition à un groupement (330) d'objets parent/enfants, le groupement (330) d'objets parent/enfants comprenant au moins un objet parent (340) et un ou plusieurs objets enfants (342, 344, 346) qui sont positionnés dans un cadre de l'objet parent (340) ;
la détection d'une entrée pour redimensionner au moins un premier objet du groupement (330) d'objets parent/enfants qui est l'un parmi l'ensemble d'objets associés de la première logique de disposition ; en réponse à la détection de l'entrée, la mise en œuvre automatique de la première logique de disposition en redimensionnant au moins un second objet du groupement (330) d'objets parent/enfants qui est l'un parmi les ensembles d'objets cibles, de manière à maintenir la relation dimensionnelle relative identifiée par la première configuration de disposition.

2. Procédé selon la revendication 1, dans lequel la première logique de disposition est une logique de disposition de remplissage (« fill ») pour redimensionner un ensemble d'objets enfants (342, 344, 346) du groupement (330) d'objets parent/enfants liés en réponse à une entrée qui redimensionne un objet parent (340) du groupement (330) d'objets parent/enfants liés.

3. Procédé selon la revendication 1, dans lequel la première logique de disposition est une logique de disposition de rapprochement (« hug ») pour redimensionner un objet parent (340) du groupement (330) d'objets parent/enfants liés en réponse à une entrée qui redimensionne un ensemble d'objets enfants (342, 344, 346) du groupement (330) d'objets parent/enfants liés.

4. Procédé selon la revendication selon l'une quelconque des revendications précédentes, dans lequel la collection de logiques de disposition (162) comprend une logique de disposition d'espacement qui met en œuvre une configuration d'espacement entre des objets sélectionnés de l'ensemble d'objets liés, et le procédé comprenant en outre, en réponse à la détection de l'entrée utilisateur, la mise en œuvre automatique de la logique de disposition d'espacement en maintenant la configuration d'espacement entre les objets de l'ensemble d'objets liés.

5. Procédé selon la revendication 4, dans lequel la configuration de disposition d'espacement identifie une relation spatiale prédéterminée entre au moins une limite de l'objet parent (340) et une limite des un ou plusieurs objets enfants (342, 344, 346).

6. Procédé selon les revendications 4 ou 5, dans lequel la mise en œuvre automatique de la logique de disposition d'espacement comprend le maintien d'une relation spatiale prédéterminée entre un ou plusieurs objets enfants (342, 344, 346) du groupement (330) d'objets parent/enfants.

7. Procédé selon l'une quelconque des revendications 1 à 3, le procédé comprenant en outre l'application sélective, en réponse à une entrée utilisateur, de la première logique de disposition à un ou plusieurs objets du groupement (330) d'objets parent/enfants, mais pas à tous les objets du groupement (330) parent/enfants.

8. Procédé selon la revendication 6, dans lequel le maintien de la relation spatiale prédéterminée comprend le maintien d'un espacement intérieur entre chaque paire adjacente d'objets enfants (342, 344, 346) du groupement (330) d'objets parent/enfants pour qu'ils soient égaux les uns aux autres.

9. Procédé selon la revendication 8, dans lequel le maintien de la relation spatiale prédéterminée comprend le maintien d'un espacement de limite entre au moins une première bordure de l'objet parent (340) du groupement (330) d'objets parent/enfants et une bordure d'un enfant adjacent (342, 344, 346) du groupement (330) d'objets parent/enfants.

10. Procédé selon l'une quelconque des revendications précédentes, dans lequel la première logique de disposition est automatiquement mise en œuvre soit dans une direction horizontale, soit dans une direction verticale.

11. Procédé selon l'une quelconque des revendications 1 à 3, dans lequel la première logique de disposition est automatiquement mise en œuvre dans les directions horizontale et verticale.

12. Procédé selon les revendications 1 à 3, dans lequel une entrée utilisateur pour lier la première logique de disposition au groupement (330) d'objets parent/enfants provient d'un premier utilisateur, et une entrée pour redimensionner au moins le premier objet du groupement (330) d'objets parent/enfants provient d'un second utilisateur.

13. Procédé selon les revendications 4, 5, 8 ou 9, dans lequel la logique de disposition d'espacement met en œuvre un espacement dynamique entre des objets du groupement (330) parent/enfants.

14. Procédé selon l'une quelconque des revendications précédentes, comprenant en outre :
la fourniture d'une fonction interactive permettant à un utilisateur de sélectionner une ou plusieurs des logiques de disposition de la collection à lier au groupement (330) d'objets parent/enfants, la fonction permettant à l'utilisateur de basculer entre la première configuration de disposition et une seconde configuration de disposition, la première configuration de disposition correspondant à l'une d'une configuration de disposition de rapprochement ou d'une configuration de disposition de remplissage et la seconde configuration de disposition correspondant à l'autre de la configuration de disposition de rapprochement ou de la configuration de disposition de remplissage.

15. Procédé selon l'une quelconque des revendications précédentes, le procédé étant mis en œuvre en transmettant à un autre dispositif informatique des instructions lisibles par ordinateur destinées à réaliser le procédé.

16. Système informatique en réseau comprenant :
un sous-système de mémoire pour stocker un ensemble d'instructions ;
un ou plusieurs processeurs qui fonctionnent pour communiquer l'ensemble d'instructions à une pluralité de dispositifs utilisateurs (10), l'ensemble d'instructions comprenant des instructions qui, lorsqu'elles sont exécutées par un ou plusieurs dispositifs d'une pluralité de dispositifs, amènent les un ou plusieurs dispositifs à réaliser un procédé selon l'une quelconque des revendications précédentes.

17. Support de stockage non transitoire lisible par ordinateur qui stockent des instructions qui, lorsqu'elles sont exécutées par un ou plusieurs processeurs d'un système informatique, amènent le système informatique à réaliser un procédé selon l'une quelconque des revendications précédentes.
